(19) Europäisches Patentamt
European Patent Office
Office européen des brevets

(11) EP 3 805 013 A1

(12) # EUROPEAN PATENT APPLICATION
published in accordance with Art. 153(4) EPC

(43) Date of publication:
**14.04.2021 Bulletin 2021/15**

(21) Application number: **19812098.2**

(22) Date of filing: **29.05.2019**

(51) Int Cl.:
***B60C 1/00*** *(2006.01)* ***B60C 9/20*** *(2006.01)*
***B60C 9/22*** *(2006.01)* ***B60C 15/04*** *(2006.01)*
***C08L 67/03*** *(2006.01)*

(86) International application number:
**PCT/JP2019/021349**

(87) International publication number:
**WO 2019/230822 (05.12.2019 Gazette 2019/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.05.2018 JP 2018103776**
**09.11.2018 JP 2018211658**

(71) Applicant: **Bridgestone Corporation**
**Chuo-Ku**
**Tokyo 104-8340 (JP)**

(72) Inventors:
- **YAMADA, Takumi**
  **Tokyo 104-8340 (JP)**
- **ANZAI, Hiroyuki**
  **Tokyo 104-8340 (JP)**
- **FUDEMOTO, Hiroyuki**
  **Tokyo 104-8340 (JP)**

(74) Representative: **Oxley, Robin John George**
**Marks & Clerk LLP**
**15 Fetter Lane**
**London EC4A 1BW (GB)**

(54) **RESIN METAL COMPOSITE MEMBER FOR TIRES, METHOD FOR PRODUCING SAME, AND TIRE**

(57) A resin-metal composite member for a tire includes a metal member (27) and a coating resin layer (28) that covers the metal member (27) and contains a resin material. The resin material contains at least a thermoplastic elastomer, and the melt flow rate of the coating resin layer is from 0.5 g/10 min to 16.5 g/10 min.

FIG.2

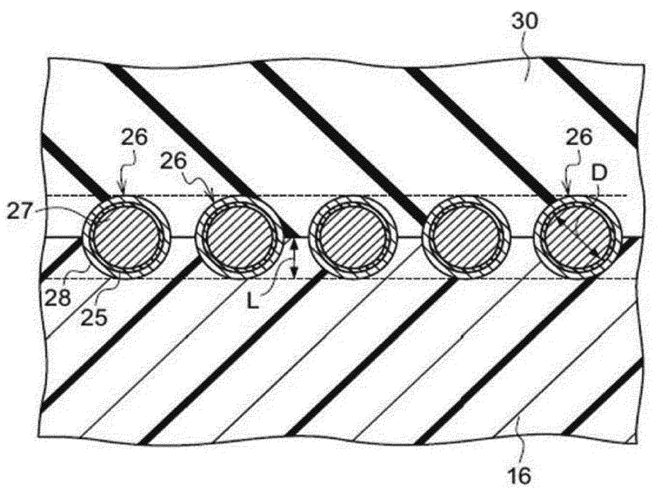


EP 3 805 013 A1

## Description

Technical Field

The present disclosure relates to a resin-metal composite member for a tire, a method of manufacturing the same, and a tire.

Background Art

Conventionally, as part of attempts to improve the durability (for example, stress resistance, internal pressure resistance, and rigidity) of tires, a reinforcing belt member which is wound around a member forming the skeleton of a tire (for example, carcass or tire frame) has been provided.

Usually, tires are provided with a bead member that plays a role of fixing to a rim, and a metal wire is used as a bead wire for this bead member.

In addition, a method has been proposed, in which a metal member such as a reinforcing cord or a bead wire is coated with a resin material to improve adhesive durability between the metal member provided on a tire and a carcass or a tire frame.

For example, in Patent Document 1, a tire has been proposed which includes an annular tire frame formed of at least a thermoplastic resin material, the tire having a reinforcing cord member that is wound around an outer circumferential portion of the tire frame in the circumferential direction to form a reinforcing cord layer, and the thermoplastic resin material including at least a polyester-based thermoplastic elastomer.

In addition, in Patent Document 2, a composite reinforcing member has also been proposed which includes at least one reinforcing thread and a layer of a thermoplastic polymer composition, the layer of a thermoplastic polymer composition covering the thread, individually each thread, or collectively several threads, the thermoplastic polymer composition including at least one thermoplastic polymer having a positive glass transition temperature, a poly(p-phenylene ether), and a functionalized unsaturated thermoplastic styrene (TPS) elastomer having a negative glass transition temperature, and the TPS elastomer bearing functional groups selected from epoxide groups, carboxyl groups and acid anhydride groups, or ester groups.

[Patent Document 1] Japanese Patent Application Laid-open (JP-A) No. 2012-046025

SUMMARY OF INVENTION

<Problem to be Solved by Invention>

As described above, there is a known technique whereby a metal member such as a reinforcing cord or a bead wire is covered with a resin material so as to improve the adhesion property of the metal member to a carcass or a tire frame. However, from the viewpoint of improving tire durability, improvement in the fatigue durability of the coating resin layer is requested.

In view of the above circumstances, the present disclosure addresses provision of a resin-metal composite member for a tire which has excellent fatigue durability and which is a member including a metal member and provided in a tire, a method of manufacturing the same, and a tire including the resin-metal composite member for a tire. Solution to Problem

Summary of the present disclosure is described below.

<1> A resin-metal composite member for a tire, the composite member comprising a metal member and a coating resin layer that covers the metal member and contains a resin material,
wherein the resin material contains at least a thermoplastic elastomer, and the coating resin layer has a melt flow rate of from 0.5 g/10 min to 16.5 g/10 min. Advantageous Effects of Invention

According to the present disclosure, a resin-metal composite member for a tire which has an excellent fatigue durability and which is a member including a metal member and provided in a tire, a method of manufacturing the same, and a tire including the resin-metal composite member for a tire can be provided.

BRIEF DESCRIPTION OF DRAWINGS

FIG. 1A is a perspective view which shows a cross-section of a part of a tire according to a first embodiment. FIG.

1B is a cross-sectional view of a bead portion fitted to a rim of the tire shown in FIG. 1A.

FIG. 2 is a cross-sectional view taken along a tire rotation axis which shows a state in which a reinforcing cord member is embedded in a crown portion of a tire frame of a tire according to the first embodiment.

FIG. 3 is an explanatory view explaining an operation of providing a reinforcing cord member in a crown portion of a tire frame using a reinforcing cord member heating apparatus and rollers.

FIG. 4 is a half cross-sectional view which shows one side of a cut surface formed after cutting a run-flat tire according to a second embodiment in a state of being assembled to a rim taken along a tire width direction and a tire diameter direction.

FIG. 5 is a partially enlarged sectional view which shows a bead core in a run-flat tire according to the second embodiment.

FIG. 6 is a perspective view which shows a cord layer in a run-flat tire according to the second embodiment.

FIG. 7 is a partially enlarged cross-sectional view which shows a modified example in which a bead core is formed by a wire bundle in which plural bead wires are coated with a coating resin in a run-flat tire according to the second embodiment.

FIG. 8 is a half cross-sectional view which shows a modified example in which a belt layer is formed by using a resin-coated cord having an approximate parallelogram cross-section in which plural reinforcing cords are coated with a coating resin in the run-flat tire according to the second embodiment.

## MODES FOR CARRYING OUT INVENTION

Specific embodiments of the present disclosure are described below in detail. However, the present disclosure is by no means limited to the following embodiments, and modifications may be made, as appropriate, within the purpose of the present disclosure.

The term "resin" as used herein refers to a concept that includes a thermoplastic resin, a thermoplastic elastomer, and a thermosetting resin, but does not include vulcanized rubber. In the description of resins provided below, "same type" means that one resin has a common skeleton with a skeleton constituting a main chain of another resin, for example, an ester-based resin and another ester-based resin, or a styrene-based resin and another styrene-based resin.

Any numerical range specified using "to" in the present specification means a range including the values indicated before and after "to" as the lower and upper limit values.

In the present specification, the term "step" includes not only a step which is an independent step but also any step which is not clearly distinguished from another step as long as the purpose of the specified step is achieved.

In the present specification, the term "main component" means a component having the highest mass-based content in a mixture, unless otherwise specified.

In the present specification, a "thermoplastic resin" means a polymer compound that does not have rubber-like elasticity and that has a property such that a material formed from the polymer compound softens and flows as the temperature increases, and becomes relatively hard and strong when cooled.

In the present specification, "thermoplastic elastomer" means a copolymer including a hard segment and a soft segment. Examples of the thermoplastic elastomer include a polymer compound that has rubber-like elasticity and that has a property such that a material formed from the polymer compound softens and flows as the temperature increases, and becomes relatively hard and strong when cooled. Specific examples of the thermoplastic elastomer include, for example, a copolymer including a polymer for forming a crystalline hard segment having a high melting point or a hard segment having a high cohesive force, and a polymer for forming an amorphous soft segment having a low glass transition temperature.

In the present specification, the "hard segment" refers to a hard component that is relatively harder than the soft segment. The hard segment is preferably a molecular constraint component which serves as a cross-linking point of the cross-linked rubber that works to prevent deformation of plastic. An example of the hard segment is a segment including a structure that includes a rigid group such as an aromatic group or an alicyclic group in the main skeleton or a structure that enables inter-molecular packing due to an inter-molecular hydrogen bonding or $\pi$-$\pi$ interaction.

In present specification, the "soft segment" refers to a soft component that is relatively softer than the hard segment. The soft segment is preferably a flexible component exhibiting rubber elasticity. An example of the soft segment is a segment that has a structure including a long chain group (for example, long chain alkylene group) in the main chain, having a high degree of freedom in terms of molecular rotation, and having elasticity.

### <Resin-Metal Composite Member for Tire>

The resin-metal composite member for a tire according to the present embodiment (hereinafter, also simply referred to as "resin-metal composite member") includes a metal member and a coating resin layer that covers the metal member and contains a resin material.

The resin material contained in the coating resin layer contains at least a thermoplastic elastomer, and the melt flow rate (MFR) of the coating resin layer is from 0.5 g/10 min to 16.5 g/10 min (in conditions of 260°C and 2.16 kg).

In a tire, a metal member (i.e., a metal cord) may be used as a reinforcing cord of a reinforcing belt member that is wound around an outer circumferential portion of a member forming the tire frame (e.g., a carcass or a tire frame). Further, a metal member (i.e., a metal cord) may be used as a bead wire in a bead that plays a role of fixing the tire to a rim. An ordinary carcass is made of a rubber as an elastic material, and an ordinary tire frame is made of a resin as an elastic material. From the viewpoint of reducing the rigidity difference between a carcass or tire frame made of such an elastic material and the above-described metal member, the metal member is used in a state of being covered with a coating resin layer containing a resin material.

However, from the viewpoint of improving the durability of the tire, the coating resin layer covering the metal member is requested to have durability as well. In particular, improvement in fatigue durability in a case in which a high load is applied repeatedly is requested.

Under the foregoing circumstances, the present inventors found that excellent fatigue durability can be obtained by adopting a configuration in which the resin material in the coating resin layer covering the metal member contains at least a thermoplastic elastomer, and in which the melt flow rate (MFR) of the coating resin layer is 16.5 g/10 min or less (in conditions of 260°C and 2.16 kg).

The reason can be inferred as follows.

When the MFR of the coating resin layer is from 16.5 g/10 min or less, the coating resin layer itself exhibits high fatigue durability, and excellent fatigue durability is exhibited even in a case in which a high load is repeatedly applied.

Since the coating resin layer having an MFR of 16.5 g/10 min or less can be extruded by applying pressure when the coating resin layer is applied to the metal member, the shape thereof can be stabilized. Further, in a case in which an adhesive layer is provided between the metal member and the coating resin layer, the coating resin layer can be extruded by applying pressure at the time of application of the coating resin layer, whereby the adhesive resin in the adhesive layer is allowed to penetrate to the metal member. As a result, excellent fatigue durability is exhibited even in a case in which a high load is repeatedly applied to the coating resin layer.

It is presumed that improved durability of the coating resin layer allows suppression of the occurrence of breakage, the occurrence of slide at the adhesion interface, and the like when a load is applied to the coating resin layer, and thus, durability of the tire itself can be improved as well.

In addition, although, various thermoplastic elastomers have been conventionally used in the tire frame in tires having a tire frame formed with a resin material, the tire frame is generally formed by injection molding from the viewpoint of moldability. In this regard, a resin material having an MFR of 0.5 g/10 min or less (in conditions of 260°C and 2.16 kg) cannot be injection-molded unless it is heated to a high temperature, but the resin decomposes at a high temperature, which results in a decrease in strength. For this reason, it has been considered that it is not easy to apply a resin material having an MFR of 0.5 g/10 min or less to a tire frame.

Meanwhile, a coating resin layer that covers a metal member can be formed by extruding a resin material onto the metal member. Since molding can be performed without increasing the temperature to a temperature that is as high as the temperature employed in injection molding, decomposition of the resin can be reduced even when a resin material having an MFR of 0.5 g/10 min or less is used, and a coating resin layer having high strength can be formed. According to the present embodiment, excellent fatigue durability is exhibited even in a case in which a high load is repeatedly applied to the coating resin layer, also from these viewpoints.

Melt Flow Rate (MFR)

The upper limit of the melt flow rate (MFR) of the coating resin layer is 16.5 g/10 min or less (in conditions of 260°C and 2.16 kg). The MFR is preferably 16 g/10 min or less, more preferably 15.4 g/10 min or less. Since the MFR of the coating resin layer is from 16.5 g/10 min or less, the coating resin layer exhibits excellent fatigue durability.

Meanwhile, the lower limit of the MFR of the coating resin layer is 0.5 g/10 min or more (in conditions of 260°C and 2.16 kg), preferably 2 g/10 min or more (in conditions of 260°C and 2.16 kg), more preferably 4 g/10 min or more (in conditions of 260°C and 2.16 kg). As the MFR of the coating resin layer is 0.5 g/10 min or more, it is possible to perform molding capable of extrusion of complicated shapes in extrusion molding.

The upper and lower limits of the MFR of the coating resin layer are preferably 2 g/10 min or more but 16 g/10 min or less, and more preferably 4 g/10 min or more but 15.4 g/10 min or less.

The melt flow rate (MFR) of the coating resin layer is measured by the following method after cutting out a sample for measurement from the coating resin layer. The measurement method complies with JIS-K7210-1 (2014). Specifically, MFR is measured using a melt indexer (model number: 2A-C manufactured by Toyo Seiki Seisaku-sho, Ltd.). The MFR is determined under the measurement conditions including a temperature of 260°C, a load of 2.16 kg, an interval of 25 mm, and an orifice of 2.09 $\Phi \times$ 8L (mm).

Weight Average Molecular Weight (Mw)

The weight average molecular weight Mw (in terms of conversion to polymethyl methacrylate) of the resin material contained in the coating resin layer is preferably 44,000 or more, more preferably 45,000 or more, still more preferably 47,000 or more. When the Mw of the resin material is 44,000 or more, the coating resin layer exhibits excellent fatigue durability.

Meanwhile, the upper limit of Mw of the resin material is preferably 100,000 or less, more preferably 90,000 or less, still more preferably 79,000 or less. As the Mw of the resin material is 100,000 or less, it is possible to perform molding capable of extrusion of complicated shapes in extrusion molding.

The upper and lower limits of Mw of the resin material are preferably from 44,000 to 100,000, more preferably from 45,000 to 90,000, still more preferably from 47,000 to 79,000.

The weight average molecular weight Mw of the resin material contained in the coating resin layer is measured by the following method after cutting out a sample for measurement from the coating resin layer.

The weight average molecular weight is determined by gel permeation chromatography (GPC, model number: HLC-8320GPC, manufactured by Tosoh Corporation). The weight average molecular weight in terms of polymethyl methacrylate (PMMA) is determined using an RI detector under the following measurement conditions: column: TSK-GEL GMHXL (manufactured by Tosoh Corporation), eluent: HFIP (hexafluoroisopropanol manufactured by FUJIFILM Wako Pure Chemical Corporation), column temperature: 40°C, flow rate: 1 mL/minute.

Control Method

Here, a method of setting the melt flow rate (MFR) of the coating resin layer to a MFR of from 0.5 g/10 min to 16.5 g/10 min will be described.

The coating resin layer may contain only one kind of resin as a component of the resin (i.e., the resin material), or may contain a mixture of two or more kinds of resins. In other words, the resin material contained in the coating resin layer may be only one kind of thermoplastic elastomer, or may be a mixed resin of plural kinds of resins including at least a thermoplastic elastomer.

In a case in which the coating resin layer contains only one kind of resin as the resin material, the coating resin layer contains a thermoplastic elastomer as the resin. By using a thermoplastic elastomer having a melt flow rate (MFR) of from 0.5 g/10 min to 16.5 g/10 min as this resin, the MFR of the coating resin layer can be easily adjusted in a range of from 0.5 g/10 min to 16.5 g/min. In a case in which the coating resin layer contains additives or the like, the MFR of the coating resin layer is also adjusted by the types and amounts of these additives.

In a case in which only one type of resin is contained as the resin material, the Mw of the resin material contained in the coating resin layer can be set in the above range by using a thermoplastic elastomer having a weight average molecular weight Mw in the above range.

Meanwhile, in a case in which the coating resin layer contains a mixture of two or more kinds of resins as the resin material, the MFR of the coating resin layer can be easily adjusted within the above range by adjusting the MFR of the entire resin material, in which two or more kinds of resins are mixed, to from 0.5 g/10 min to 16.5 g/10 min. Therefore, for example, a resin having a low MFR and a resin having a high MFR may be mixed such that the MFR as a whole is adjusted to be from 0.5 g/10 min to 16.5 g/10 min. In a case in which the coating resin layer contains additives or the like, the MFR of the coating resin layer is also adjusted by the types and amounts of these additives.

Also in a case in which a mixture of two or more kinds of resins are contained as the resin material, the Mw of the resin material contained in the coating resin layer can be adjusted within the above range by adjusting the weight average molecular weight Mw of the entire resin material, in which two or more kinds of resins are mixed, within the above range.

In a case in which two or more kinds of resins are mixed and contained in the coating resin layer, it is preferable that two or more resins, which are at least one thermoplastic elastomer and at least one additive resin selected from an amorphous resin having an ester bond or a polyester-based thermoplastic resin, are contained. When the above-described additive resin is contained in addition to the thermoplastic elastomer, it becomes easy to adjust the MFR of the entire resin material to a MFR of from 0.5 g/10 min to 16.5 g/10 min, and, as a result, the MFR of the coating resin layer is easily adjusted within the above range. Further, it becomes easy to adjust the Mw of the entire resin material within the above range.

Details of the amorphous resin having an ester bond and the polyester-based thermoplastic resin are described later.

Tensile Elastic Modulus

The tensile elastic modulus of the coating resin layer is preferably from 110 MPa to 660 MPa, more preferably

from 300 MPa to 600 MPa, still more preferably from 350 MPa to 550MPa.

As the tensile elastic modulus of the coating resin layer is 110 MPa or more, the coating resin layer exhibits excellent rigidity. Meanwhile, as the tensile elastic modulus of the coating resin layer is 660 MPa or less, excellent impact resistance at low temperatures is exhibited.

The tensile elastic modulus of the coating resin layer is measured in accordance with JIS K7113: 1995.

Specifically, for example, the tensile speed is set to 100 mm/min, and the tensile elastic modulus is measured using Shimadzu Autograph AGS-J (5KN) manufactured by Shimadzu Corporation. In the case of measuring the tensile elastic modulus of the coating resin layer contained in the resin-metal composite member, for example, a measurement sample of the same material as the coating resin layer may be separately prepared and subjected to elastic modulus measurement.

The tensile elastic modulus of the coating resin layer can be controlled by the type and the like of a resin component (i.e., resin material) contained in the coating resin layer.

Respective members for forming the resin-metal composite member are described below in detail.

The resin-metal composite member has a structure including a metal member and a coating resin layer that covers the metal member. The resin-metal composite member may include another layer, and, for example, an adhesive layer may be disposed between the metal member and the coating resin layer.

The shape of the resin-metal composite member is not particularly limited. Examples of the shape of the resin-metal composite member include a cord shape and a sheet shape.

The resin-metal composite member is used for a carcass included in a tire, a reinforcing belt member disposed in the crown portion (i.e., the outer circumferential portion) of a member forming the skeleton of the tire such as a tire frame, a bead member that works to fix a tire to a rim, or the like.

For example, in an embodiment in which the resin metal composite member is used as a reinforcing belt member, it can be used for a belt layer formed by arranging one or more cord-shaped resin-metal composite members in the outer circumferential portion of the carcass or the tire frame along the circumferential direction of the tire, an interlaced belt layer in which plural cord-shaped resin-metal composite members are arranged so as to have an angle with respect to the circumferential direction of the tire and to intersect with each other, or the like.

The resin-metal composite member may include a metal member, an adhesive layer, and a coating resin layer in this order. In the resin-metal composite member, a structure having a metal member, an adhesive layer, and a coating resin layer in this order may be in a state in which the entire surface of the metal member is covered with the coating resin layer via the adhesive layer or in a state in which a part of the surface of the metal member is covered with the coating resin layer via the adhesive layer. Note that in at least an area where the resin-metal composite member is in contact with an elastic member such as a carcass or a tire frame, the structure is preferably such that the metal member, the adhesive layer having a relatively larger tensile elastic modulus than the coating resin layer, and the coating resin layer are disposed in this order.

In addition, the resin-metal composite member may further include another layer in addition to the metal member, the adhesive layer, and the coating resin layer. However, from the viewpoint of adhesion property between the metal member and the coating resin layer, it is preferable that the metal member and the adhesive layer are in direct contact with each other in at least a portion, and the adhesive layer and the coating resin layer are in direct contact each other in at least a portion.

[Coating Resin Layer]

(Resin Material)

The coating resin layer contains a resin material, and at least a thermoplastic elastomer is contained as the resin material. Therefore, the coating resin layer may contain only one kind of resin as the resin material, or may contain a mixture of two or more kinds of resins.

When Only One Kind of Resin Is Contained

In a case in which the coating resin layer contains only one kind of resin, a thermoplastic elastomer having a melt flow rate (MFR) of from 0.5 g/10 min to 16.5 g/10 min is preferably contained as the resin. Thus, the MFR of the coating resin layer can be easily adjusted to the above range.

In this case, the content of the thermoplastic elastomer is preferably 50% by mass or more, more preferably 60% by mass or more, still more preferably 70% by mass or more, and may be 100% by mass with respect to the entire coating resin layer.

When Two or More Kinds of Resins Are Contained

Meanwhile, in a case in which the coating resin layer contains two or more kinds of resins, it is preferable that the coating resin layer contains a thermoplastic elastomer as at least one kind thereof, and the MFR of the mixed resin material as a whole is adjusted to a MFR of from 0.5 g/10 min to 16.5 g/10 min. Thus, the MFR of the coating resin layer can be easily adjusted to the above range.
In this case, the content of the resin material as a whole is preferably 50% by mass or more, more preferably 60% by mass or more, still more preferably 70% by mass or more, and may be 100% by mass with respect to the entire coating resin layer.
In addition, the content of the thermoplastic elastomer in the total resin contained in the coating resin layer (i.e., in the resin material) is preferably more than 50% by mass, more preferably from more than 50% by mass to 100% by mass or less, still more preferably from 60% by mass to 100% by mass. In a case in which the coating resin layer contains two or more kinds of resins, the plural resins may form a sea-island structure. At this time, since the content of the thermoplastic elastomer is more than 50% by mass in the resin component (i.e., the content of other resins is less than 50% by mass), the thermoplastic elastomer constitutes the sea in the sea-island structure, and thus, high rubber elasticity is imparted to the coating resin layer.

-Thermoplastic Elastomer-

A polyester-based thermoplastic elastomer is preferable as a thermoplastic elastomer contained in the coating resin layer. In particular, in a case in which the resin-metal composite member includes an adhesive layer direct contacting the coating resin layer and being located between the metal member and the coating resin layer, and in which the adhesive layer contains a polyester-based thermoplastic elastomer (e.g., acid-modified polyester-based thermoplastic elastomer), it is preferable that the coating resin layer contains a polyester-based thermoplastic elastomer. In other words, it is preferable that the adhesive layer and the coating resin layer contain a polyester-based thermoplastic elastomer of the same type. With this configuration, a material of the adhesive layer (i.e., an adhesive) and a resin material of the coating resin layer are excellently compatible, and the surface of the adhesive layer can be coated with a resin with favorable conformity, thereby achieving high adhesiveness between the adhesive layer and the coating resin layer.

Polyester-based Thermoplastic Elastomer

An unmodified polyester-based thermoplastic elastomer is preferably contained as the polyester-based thermoplastic elastomer.
Specifics of the polyester-based thermoplastic elastomer are the same as those of the polyester-based thermoplastic elastomer used in the below-described tire frame, and their preferable embodiments are also the same. In consideration of this, detailed descriptions of the polyester-based thermoplastic elastomer are omitted here.

Other Thermoplastic Elastomers

Examples of other thermoplastic elastomers include, for example, polyamide-based thermoplastic elastomers, polystyrene-based thermoplastic elastomers, polyurethane-based thermoplastic elastomers, and olefin-based thermoplastic elastomers.
The specifics of the polyamide-based thermoplastic elastomers, polystyrene-based thermoplastic elastomers, polyurethane-based thermoplastic elastomers, and olefin-based thermoplastic elastomers described above are the same as those of the thermoplastic elastomer used in the below-described tire frame, and preferable embodiments are also the same. In consideration of this, detailed descriptions of the other thermoplastic elastomers are omitted here.
The thermoplastic elastomers may be used singly, or in combination of two or more kinds thereof.

-Other Resins-

In a case in which the coating resin layer contains two or more kinds of resins, it preferably contains at least one kind of resin (herein referred to as "additive resin") selected from an amorphous resin having an ester bond or a polyester-based thermoplastic resin, in addition to the thermoplastic elastomer.
Further, when the additive resins are contained, excellent rigidity can be obtained. The reason can be inferred as follows.
Since an amorphous resin having an ester bond and a polyester-based thermoplastic resin usually show higher rigidity than a thermoplastic elastomer, the rigidity of the entire coating resin layer can also be increased. As a result, excellent fatigue durability is exhibited even after a high load is repeatedly applied to cause fatigue.

It is presumed that the increased rigidity of the coating resin layer reduces deformation when a load is applied to the coating resin layer, and also improves durability.

In a case in which the coating resin layer contains the above-described additive resin in addition to the thermoplastic elastomer, it is preferable that the additive resin forms a discontinuous phase (i.e., island regions in the sea-island structure) in a continuous phase of the thermoplastic elastomer (i.e., the sea region in the sea-island structure). When the additive resin forms island regions in the sea-island structure, it becomes easy to impart high rigidity to the coating resin layer while maintaining the rubber elasticity derived from the thermoplastic elastomer.

-Additive Resin-

(Amorphous Resin Having Ester Bond)

The coating resin layer may contain an amorphous resin having an ester bond as an additive resin (hereinafter, also simply referred to as "specific amorphous resin").

By containing a specific amorphous resin, higher fatigue durability can easily be obtained as compared with a resin-metal composite member having a coating resin layer formed only with a thermoplastic elastomer.

The specific amorphous resin included as the additive resin preferably constitutes a discontinuous phase (i.e., island regions in the sea-island structure) in a continuous phase of the thermoplastic elastomer (i.e., the sea region in the sea-island structure).

In a case in which the coating resin layer includes a polyester-based thermoplastic elastomer as the thermoplastic elastomer, the specific amorphous resin (i.e., an amorphous resin having an ester bond), having an ester bond, has an excellent compatibility with the polyester-based thermoplastic elastomer. In addition, the specific amorphous resin has excellent dispersibility in the continuous phase, and the specific amorphous resin is prevented from aggregating and exists in the state of fine particles. It is considered that the effect in terms of improving the rigidity is more effectively exhibited because of what is described above.

The term "amorphous resin" as used herein refers to a thermoplastic resin having an extremely low degree of crystallinity or which cannot be in a crystallized state. The specific amorphous resin included in the coating resin layer may include only one kind of resin or two or more kinds of resins.

From the viewpoint of improving the rigidity of the coating resin layer, the glass transition temperature (Tg) of the specific amorphous resin is preferably 40°C or more, more preferably 60°C or more, still more preferably 80°C or more.

The Tg of the specific amorphous resin is a value measured by DSC in accordance with JIS K 6240: 2011. Specifically, the temperature at the intersection of the original baseline and the tangent at the inflection point at the time of DSC measurement is defined as Tg. The measurement can be performed using, for example, "DSC Q100" of TA Instruments Corporate at a sweep rate of 10°C/min.

Examples of the amorphous resin having an ester bond include amorphous polyester-based thermoplastic resins, amorphous polycarbonate-based thermoplastic resins, and amorphous polyurethane-based thermoplastic resins. Of these, amorphous polyester-based thermoplastic resins and amorphous polycarbonate-based thermoplastic resins are preferable from the viewpoint of further improving fatigue durability of the coating resin layer.

Examples of a commercially available product of the specific amorphous resin include amorphous polyester resin "VYLON" Series manufactured by Toyobo Co., Ltd., amorphous polycarbonate resin "NOVALEX" Series manufacture by Mitsubishi Engineering-Plastics Corporation, and amorphous polyester resin "ALTESTER" Series manufactured by Mitsubishi Gas Chemical Company, Inc.

(Polyester-based Thermoplastic Resin)

The coating resin layer may contain a polyester-based thermoplastic resin as an additive resin.

By containing a polyester-based thermoplastic resin, higher fatigue durability can easily be obtained as compared with a resin-metal composite member having a coating resin layer formed only with a thermoplastic elastomer.

The polyester-based thermoplastic resin contained as an additive resin preferably constitutes a discontinuous phase (i.e., island regions in the sea-island structure) in a continuous phase of the thermoplastic elastomer (i.e., the sea region in the sea-island structure).

In a case in which the coating resin layer contains a polyester-based thermoplastic elastomer as the thermoplastic elastomer, the polyester-based thermoplastic resin, having an ester bond, has excellent compatibility with the polyester-based thermoplastic elastomer. In addition, the polyester-based thermoplastic resin has excellent dispersibility in the continuous phase, and the polyester-based thermoplastic resin is prevented from aggregating and exists in the state of fine particles. It is considered that the effect in terms of improving the rigidity is more effectively exhibited because of what is described above.

In a case in which the coating resin layer contains a polyester-based thermoplastic elastomer as a thermoplastic

elastomer, further inclusion of a polyester-based thermoplastic resin in the coating resin layer means that the coating resin layer contains the thermoplastic resin, which includes a structural unit of the same type as a hard segment of the polyester-based thermoplastic elastomer. In other words, the inclusion would result in an increase in the proportion of hard segments in the coating resin layer (hereinafter, also referred to as "HS ratio"). As described above, it is presumed that the rigidity of the coating resin layer is increased by increasing the proportion of hard segments in the coating resin layer, and the fatigue durability is also improved from this viewpoint.

As used herein, the phrase "structural unit of the same type as a hard segment of the polyester-based thermoplastic elastomer" means a structural unit of which the bonding mode constituting the main chain is of the same type as that of structural units corresponding to the hard segment.

The polyester-based thermoplastic resin contained in the coating resin layer may include only one kind of resin or two or more kinds of resins.

From the viewpoint of improving fatigue durability, the HS ratio in the coating resin layer is preferably from 60 mol% to less than 98 mol%, more preferably from 65 mol% to 90 mol%.

As used herein, the HS ratio in the coating resin layer is the ratio of HS to the total of hard segments (HS) to soft segments (SS) in the coating resin layer, and is calculated by the following formula. As used herein, the phrase "hard segments (HS) in the coating resin layer" means the total of hard segments in the polyester-based thermoplastic elastomer contained in the coating resin layer and structural units in the polyester-based thermoplastic resin that are of the same type as the hard segments.

$$\text{HS ratio (mol\%)} = \{\text{HS}/(\text{HS} + \text{SS})\} \times 100$$

The HS ratio (mol%) of the coating resin layer can be measured by, for example, the nuclear magnetic resonance (NMR) method as described below. For example, The HS ratio can be measured by performing $^1$H-NMR measurement at room temperature using AL400 manufactured by JEOL Ltd. as an NMR analyzer and preparing a measurement sample by diluting and dissolving the resin at 20 mg/2 g with HFIP-$d_2$(1,1,1,3,3,3-hexafluoroisopropanol-$d_2$) serving as a solvent.

Examples of the polyester-based thermoplastic resin include the polyester for forming a hard segment of the polyester-based thermoplastic elastomer described later in the section of the tire frame. Specific examples thereof include: aliphatic polyesters such as polylactic acid, polyhydroxy-3-butylbutyric acid, polyhydroxy-3-hexylbutyric acid, poly(ε-caprolactone), polyenantholactone, polycaprilolactone, polybutylene adipate, and polyethylene adipate; and aromatic polyesters such as polyethylene terephthalate (PET), polybutylene terephthalate (PBT), polyethylene naphthalate (PEN), and polybutylene naphthalate (PBN). Of these, from the viewpoint of improving fatigue durability as well as heat resistance and workability, the polyester-based thermoplastic resin is preferably an aromatic polyester, more preferably polybutylene terephthalate, polyethylene terephthalate, polybutylene naphthalate, or polyethylene naphthalate, still more preferably polybutylene terephthalate.

In addition, in a case in which the coating resin layer contains a polyester-based thermoplastic elastomer as a thermoplastic elastomer, closer resemblance between the structure of a hard segment of the polyester-based thermoplastic elastomer and the structure of the polyester-based thermoplastic resin is more preferable from the viewpoint of enhancing the compatibility therebetween and improving fatigue durability.

For example, in a case in which a hard segment of the polyester-based thermoplastic elastomer is polybutylene terephthalate, a polyester-based thermoplastic resin to be used is preferably polybutylene terephthalate, polyethylene terephthalate, polybutylene naphthalate, or polyethylene naphthalate, more preferably polybutylene terephthalate.

As used herein, the scope of the feature that the polyester-based thermoplastic resin "includes a structural unit of the same type as a hard segment of the polyester-based thermoplastic elastomer" encompasses both a case in which the polyester thermoplastic resin includes only a structural unit of the same type as a hard segment of the polyester-based thermoplastic elastomer and a case in which 80 mol% or more (preferably 90 mol% or more, more preferably 95 mol% or more) of structural units constituting the polyester-based thermoplastic resin are structural units of the same type as hard segments of the polyester-based thermoplastic elastomer. In a case in which there are two or more kinds of structural units corresponding to a hard segment of the polyester-based thermoplastic elastomer, a polyester-based thermoplastic resin used herein includes a structural unit of the same type as the structural unit having the largest proportion among the two or more kinds of structural unit.

Examples of a commercially available product of the polyester-based thermoplastic resin which can be used include, for example, "DURANEX (registered trademark)" Series (e.g., 201AC, 2000, 2002, or the like) manufactured by Polyplastics Co., Ltd., "NOVADURAN (registered trademark)" Series (e.g., 5010R5, 5010R3-2, or the like) manufacture by Mitsubishi Engineering-Plastics Corporation, and "TORAYCON (trademark)" Series (e.g., 1401X06, 1401X31, or the like) manufactured by Toray Industries, Inc.

(Physical Properties of Additive Resin)

The melt flow rate (MFR) of the additive resin is preferably from 5 g/10 min to 55 g/10 min (in conditions of 260°C and 2.16 kg), more preferably from 7.5 g/10 min to 50 g/10 min, still more preferably from 10 g/10 min to 45 g/10 min.

When the MFR of the additive resin is 55 g/10 min or less, the coating resin layer is likely to exhibit excellent fatigue durability. When the MFR of the additive resin is 5 g/10 min or more, it is possible to perform molding capable of extrusion of complicated shapes in extrusion molding.

The melt flow rate (MFR) of the additive resin is measured by the following method. The measurement method complies with JIS-K7210-1 (2014). Specifically, MFR is measured using a melt indexer (model number: 2A-C manufactured by Toyo Seiki Seisaku-sho, Ltd.). The MFR is determined under the measurement conditions including a temperature of 260°C, a load of 2.16 kg, an interval of 25 mm, and an orifice of 2.09 $\Phi \times$ 8L (mm).

The weight average molecular weight of the additive resin is preferably from 10,000 to 70,000, more preferably from 20,000 to 50,000, still more preferably from 28,000 to 37,000.

When the weight average molecular weight of the additive resin is 10,000 or more, the coating resin layer is likely to exhibit excellent fatigue durability. When the weight average molecular weight of the additive resin is 70,000 or less, it is possible to perform molding capable of extrusion of complicated shapes in extrusion molding.

The weight average molecular weight of the additive resin is measured by the following method.

The weight average molecular weight is determined by gel permeation chromatography (GPC, model number: HLC-8320GPC, manufactured by Tosoh Corporation). The weight average molecular weight in terms of conversion to polymethyl methacrylate (PMMA) is determined using an RI detector under the following measurement conditions: column: TSKgel SuperHM-M (manufactured by Tosoh Corporation), eluent: hexafluoroisopropanol eluent (i.e., one obtained by dissolving sodium trifluoroacetate (manufactured by FUJIFILM Wako Pure Chemical Corporation) serving as a solute at 0.67 g/L in hexafluoroisopropanol (manufactured by FUJIFILM Wako Pure Chemical Corporation) serving as a solvent), column temperature: 40°C, flow rate: 1 mL/minute.

The content of the additive resin is preferably from 5% by mass to less than 50% by mass, more preferably from 7% by mass to 40% by mass, still more preferably from 10% by mass to 30% by mass with respect to the total resins contained in the coating resin layer (i.e., in the resin material).

When the content of the additive resin is less than 50% by mass in the resin material (i.e., the content of the thermoplastic elastomer is more than 50% by mass), the thermoplastic elastomer constitutes the sea in the sea-island structure, and thus, high rubber elasticity is imparted to the coating resin layer. When the content of the additive resin is 5% by mass or more, high rigidity is imparted to the coating resin layer, and thus, the impact resistance at low temperatures deteriorates.

In a case in which only an amorphous resin having an ester bond (i.e., a specific amorphous resin) is contained as the additive resin, the content of the specific amorphous resin is preferably from 5% by mass to less than 50% by mass, more preferably from 7% by mass to 40% by mass, still more preferably from 10% by mass to 30% by mass with respect to the total resins contained in the coating resin layer (i.e., in the resin material).

Meanwhile, in a case in which only polyester-based thermoplastic resin is contained as the additive resin, the content of the polyester-based thermoplastic resin is preferably from 5% by mass to less than 50% by mass, more preferably from 7% by mass to 40% by mass, still more preferably from 10% by mass to 30% by mass with respect to the total resins contained in the coating resin layer (i.e., in the resin material).

The content of the additive resin in the coating resin layer can be examined by a nuclear magnetic resonance (NMR) method. The method of confirming whether or not the coating resin layer contains the additive resin is not particularly limited, and can be performed by, for example, solvent extraction, thermal analysis, cross-section observation, or the like.

-Other Components-

The coating resin layer may contain components other than the resin component (i.e., resin material). Examples of other components include rubbers, various fillers (e.g., silica, calcium carbonate, clay, and the like), anti-aging agents, oils, plasticizers, color formers, and weathering agents.

-Physical Properties-

• Thickness

The average thickness of the coating resin layer is not particularly limited. From the viewpoint of excellent durability and fusibility, the average thickness of the coating resin layer is preferably from 10 $\mu$m to 1000 $\mu$m, more preferably from 50 $\mu$m to 700 $\mu$m.

The average thickness of the coating resin layer is obtained by cutting the resin-metal composite member along the layering direction of the respective layers such as the metal member, the adhesive layer, and the coating resin layer, obtaining SEM images of the obtained cross section at five freely-selected points, and taking the number average value of thicknesses of the coating resin layer measured in the respective SEM images as the average thickness of the coating resin layer. The thickness of the coating resin layer in each SEM image refers to the thickness measured at a portion at which the thickness is smallest (for example, a portion at which the distance between the adhesive layer / coating resin layer interface and the outer periphery of the resin-metal composite member is smallest).
The measurement of layers other than the coating resin layer is also performed in accordance with this measurement.

[Metal Member]

The metal member is not particularly limited, and for example, a metal cord or the like used for a general rubber tire (for example, a tire having a carcass) can be appropriately used. Examples of the metal cord include a monofilament (i.e., single wire) composed of only one metal cord and a multifilament in which plural metal cords are twisted (i.e., stranded wire). Further, the shape of the metal member is not limited to a linear shape (i.e., cord shape), and the metal member may be, for example, a plate-shaped metal member.
As the metal member in the present embodiment, a monofilament (i.e., single wire) or a multifilament (i.e., stranded wire) is preferable from the viewpoint of further improving the durability of a tire. In particular, in a case in which the resin-metal composite member according to the present embodiment is used for a reinforcing belt member, a multifilament is more preferable, and in a case in which the resin-metal composite member according to the present embodiment is used for a bead member, a monofilament is more preferable. The cross-sectional shape, size (i.e., diameter), and the like of the metal member are not particularly limited, and those suitable for a desired tire can be appropriately selected and used.
When the metal member is a stranded wire of plural cords, the number of cords may be, for example, from 2 to 10, preferably from 5 to 9.
From the viewpoint of achieving both of resistance to internal pressure and weight reduction of the tire, the thickness of the metal member is preferably from 0.2 mm to 2 mm, more preferably from 0.8 mm to 1.6 mm. The thickness of the metal member refers to the number average value of thicknesses measured at five arbitrarily selected points.
The tensile elastic modulus of the metal member itself (unless otherwise specified, "elastic modulus" in the present specification refers to tensile-elastic modulus) is usually from about 100000 MPa to 300000 MPa, preferably from 120000 MPa to 270000 MPa, more preferably from 150000MPa to 250000MPa. The tensile elastic modulus of the metal member is calculated from the inclination of a stress-strain curve drawn by a ZWICK- type chuck with a tensile tester.
The breaking elongation (specifically, tensile-elongation at break) of the metal member itself is usually from about 0.1% to 15%, preferably from 1% to 15%, more preferably from 1% to 10%. The tensile elongation at break of the metal member can be obtained from the strain of a stress-strain curve drawn by a ZWICK-type chuck with a tensile tester.

[Adhesive Layer]

The resin-metal composite member according to the present embodiment may include an adhesive layer between the metal member and the coating resin layer.

(Adhesive)

The composition of the adhesive layer is not particularly limited, but from the viewpoint of improving the adhesion property, the composition of the adhesive layer preferably includes a thermoplastic elastomer as an adhesive.
Examples of a thermoplastic elastomer include, for example, polyester-based thermoplastic elastomers, polyamide-based thermoplastic elastomers, polystyrene-based thermoplastic elastomers, polyurethane-based thermoplastic elastomers, and olefin-based thermoplastic elastomers.
The specifics of the thermoplastic elastomer are the same as those of the thermoplastic elastomer used in the tire frame described later. Therefore, detailed description of the thermoplastic elastomer is omitted here.
The adhesive layer may include an unmodified thermoplastic elastomer as the thermoplastic elastomer, but the adhesive layer more preferably includes an acid-modified thermoplastic elastomer as the adhesive from the viewpoint of improving the adhesion property. The acid-modified thermoplastic elastomer is a thermoplastic elastomer in which an acid group (examples thereof including a carboxy group (-COOH) and an anhydride group thereof, a sulfate group, a phosphoric acid group, and the like, and a carboxy group and an anhydride group thereof are particularly preferable) is introduced into a part of the molecule of the thermoplastic elastomer. Examples of the acid-modified thermoplastic elastomer include those obtained by acid-modifying an olefin-based thermoplastic elastomer used for the tire frame

described later.

The thermoplastic elastomer may be used singly or in combination of two or more kinds thereof in the adhesive layer.

(Physical Properties)

Tensile Elastic Modulus

The adhesive layer is preferably a layer having a tensile elastic modulus smaller than that of the coating resin layer. The tensile elastic modulus of the adhesive layer can be controlled by, for example, the type of the adhesive used to form the adhesive layer, the formation conditions or the thermal history (for example, heating temperature and heating time) of the adhesive layer, and the like.

For example, the lower limit of the tensile elastic modulus of the adhesive layer is preferably 1 MPa or more, more preferably 20 MPa or more, still more preferably 50 MPa or more. When the tensile elastic modulus is not less than the lower limit value described above, the adhesive performance with the metal member and the tire durability are excellent.

The upper limit of the tensile elastic modulus of the adhesive layer is preferably 1500 MPa or less, more preferably 600 MPa or less, still more preferably 400 MPa or less from the viewpoint of riding comfort.

The tensile elastic modulus of the adhesive layer can be measured in the same manner as that in the case of the tensile elastic modulus of the coating resin layer.

When the tensile elastic modulus of the adhesive layer is $E_1$ and the tensile elastic modulus of the coating resin layer is $E_2$, the value of $E_1/E_2$ is, for example, from 0.05 to 0.5, and the value of $E_1/E_2$ is preferably from 0.05 to 0.3, more preferably from 0.05 to 0.2. When the value of $E_1/E_2$ is in the above range, the durability of the tire is excellent as compared with a case in which the value is smaller than the above range, and the riding comfort during traveling is superior as compared with a case in which the value is larger than the above range.

Thickness

The average thickness of the adhesive layer is not particularly limited, but is preferably from 5 μm to 500 μm, more preferably from 20 μm to 150 μm, still more preferably 20 μm to 100 μm from the viewpoint of riding comfort during traveling and tire durability.

The average thickness of the adhesive layer is measured according to the aforementioned measurement method described with respect to the coating resin layer.

When the average thickness of the adhesive layer is $T_1$ and the average thickness of the coating resin layer is $T_2$, the value of $T_1/T_2$ is, for example, from 0.1 to 0.5, and the value of $T_1/T_2$ is preferably from 0.1 to 0.4, more preferably from 0.1 to 0.35. When the value of $T_1/T_2$ is in the above range, the riding comfort during traveling is excellent as compared with a case in which the value is smaller than the above range, and the durability of the tire is superior as compared with a case in which the value is larger than the above range.

<Method of Manufacturing Resin-Metal Composite Member for Tire>

The method of manufacturing a resin-metal composite member for a tire according to this present embodiment includes a coating resin layer forming step of applying a coating resin layer-forming composition containing a resin material onto a metal member to form a coating resin layer that covers the metal member. The resin material contains at least a thermoplastic elastomer.

Melt Flow Rate (MFR)

The upper limit of the melt flow rate (MFR) of the coating resin layer formed by the coating resin layer forming step is 16.5 g/10 min or less (in conditions of 260°C and 2.16 kg). The MFR is preferably 16 g/10 min or less, more preferably 15.4 g/10 min or less. When the MFR of the coating resin layer is from 16.5 g/10 min or less, the coating resin layer exhibits excellent fatigue durability.

Meanwhile, the lower limit of the MFR of the coating resin layer formed by the coating resin layer forming step is 0.5 g/10 min or more (in conditions of 260°C and 2.16 kg). The MFR is preferably 2 g/10 min or more, more preferably 4 g/10 min or more. When the MFR of the coating resin layer is 0.5 g/10 min or more, it is possible to perform molding capable of extrusion of complicated shapes in extrusion molding.

The upper and lower limits of the MFR of the coating resin layer formed by the coating resin layer forming step are preferably from 2 g/10 min to 16 g/10 min, more preferably from 4 g/10 min to 15.4 g/10 min.

Weight Average Molecular Weight (Mw)

The weight average molecular weight Mw (in terms of conversion to polymethyl methacrylate) of the resin material contained in the coating resin layer formed by the coating resin layer forming step is preferably 44,000 or more, more preferably 45,000 or more, still more preferably 47,000 or more. When the Mw of the resin material is 44,000 or more, the coating resin layer exhibits excellent fatigue durability.

Meanwhile, the upper limit of Mw of the resin material contained in the coating resin layer formed by the coating resin layer forming step is preferably 100,000 or less, more preferably 90,000 or less, still more preferably 79,000 or less. As the Mw of the resin material is 100,000 or less, it is possible to perform molding capable of extrusion of complicated shapes in extrusion molding.

The upper and lower limits of Mw of the resin material contained in the coating resin layer formed by the coating resin layer forming step are preferably 44,000 or more but 100,000 or less, more preferably 45,000 or more but 90,000 or less, still more preferably 47,000 or more but 79,000 or less.

<Tire>

The tire according to the present embodiment includes a member forming the skeleton of a tire (for example, a carcass, a tire frame, or the like), which contains an elastic material and is annular, and the above-described resin-metal composite member for a tire according to the present embodiment.

The resin-metal composite member for a tire is used as, for example, a reinforcing belt member, a bead member, or the like that is wound, in the circumferential direction, around the outer circumferential portion of a member forming the frame of a tire such as a carcass or a tire frame.

Here, the carcass or tire frame constituting the tire according to the present embodiment is described.

[Carcass or Tire Frame]

The term "carcass" as used herein refers to a member forming the frame of a conventional tire, and includes so-called radial carcass, bias carcass, semi-radial carcass, and the like. A carcass usually has a structure in which a reinforcing material such as a cord or a fiber is coated with a rubber material.

The term "tire frame" as used herein refers to a member corresponding to a carcass of a conventional tire and formed from a resin material (so-called tire frame for a resin tire).

Examples of an elastic material for forming the carcass include a rubber material described later, and examples of an elastic material for forming a tire frame include a resin material described later.

(Elastic Material: Rubber Material)

The rubber material may include at least a rubber (i.e., rubber component), and may include other components such as an additive unless the effects of the present embodiment are impaired. However, the content of rubber (i.e., rubber component) in the rubber material is preferably 50% by mass or more, more preferably 90% by mass or more, based on the total amount of the rubber material. The carcass can be formed using, for example, a rubber material.

The rubber component used for the carcass is not particularly limited, and natural rubber and various synthetic rubbers used in conventionally known rubber blends can be used singly or in combination of two or more kinds thereof. For example, the rubbers shown below, or a blend of two or more of these rubbers can be used.

As the natural rubber, a sheet rubber or block rubber may be used, and all of RSS #1 to #5 can be used.

As the synthetic rubber, various diene-based synthetic rubbers, diene-based copolymer rubbers, special rubbers, modified rubbers, and the like can be used. Specific examples thereof include, for example: butadiene-based polymers such as polybutadiene (BR), a copolymer of butadiene and an aromatic vinyl compound (for example, SBR or NBR), and a copolymer of butadiene and a different diene-based compound; isoprene-based polymers such as polyisoprene (IR), a copolymer of isoprene and an aromatic vinyl compound, and a copolymer of isoprene and a different diene-based compound; chloroprene rubber (CR), butyl rubber (IIR), and halogenated butyl rubber (X-IIR); an ethylene-propylene copolymer rubber (EPM); an ethylene-propylene-diene copolymer rubber (EPDM); and arbitrary blends of these.

Further, in the rubber material used for the carcass, other components such as an additive may be added to the rubber depending on the purpose.

Examples of the additive include, for example, a reinforcing material such as carbon black, a filler, a vulcanizing agent, a vulcanization accelerator, a fatty acid or a salt thereof, a metal oxide, a process oil, and anti-aging agent, and these can be appropriately blended.

The carcass formed with the rubber material is obtained by molding an unvulcanized rubber material in which

the included rubber is in an unvulcanized state into a carcass shape and vulcanizing the rubber by heating.

(Elastic Material: Resin Material)

The resin material may include at least a resin (i.e., resin component), and may include other components such as an additive unless the effects of the present embodiment are impaired. However, the content of resin (i.e., resin component) in the resin material is preferably 50% by mass or more, more preferably 90% by mass or more, based on the total amount of the resin material. The tire frame can be formed using, for example, a resin material.

Examples of a resin included in the tire frame include a thermoplastic resin, a thermoplastic elastomer, and a thermosetting resin. From the viewpoint of riding comfort during traveling, the resin material preferably includes a thermoplastic elastomer, and more preferably includes a polyamide-based thermoplastic elastomer.

Examples of the thermosetting resin include phenol-based thermosetting resins, urea-based thermosetting resins, melamine-based thermosetting resins, and epoxy-based thermosetting resins.

Examples of the thermoplastic resin include polyamide-based thermoplastic resins, polyester-based thermoplastic resins, olefin-based thermoplastic resins, polyurethane-based thermoplastic resins, vinyl chloride-based thermoplastic resins, and polystyrene-based thermoplastic resins. These may be used singly or in combination of two or more kinds thereof. Of these, as the thermoplastic resin, at least one selected from a polyamide-based thermoplastic resin, a polyester-based thermoplastic resin, or an olefin-based thermoplastic resin is preferable, and at least one selected from a polyamide-based thermoplastic resin or an olefin-based thermoplastic resin is more preferable.

Examples of the thermoplastic elastomer include, for example, a polyamide-based thermoplastic elastomer (TPA), a polystyrene-based thermoplastic elastomer (TPS), a polyurethane-based thermoplastic elastomer (TPU), an olefin-based thermoplastic elastomer (TPO), a polyester-based thermoplastic elastomer (TPEE), a thermoplastic rubber crosslinked body (TPV), or other thermoplastic elastomers (TPZ) specified in JIS K6418. Considering the elasticity required during traveling, the moldability during manufacturing, and the like, it is preferable to use a thermoplastic resin and more preferable to use a thermoplastic elastomer as the resin material for forming a tire frame.

In the present embodiment, from the viewpoint of adhesion property, it is preferable to use a resin of the same type as that in the coating resin layer included in the resin-metal composite member (for example, to use a polyester-based thermoplastic resin or polyester-based thermoplastic elastomer in the tire frame in a case in which the coating resin layer includes a polyester-based thermoplastic resin or polyester-based thermoplastic elastomer, or to use a polyamide-based thermoplastic resin or polyamide-based thermoplastic elastomer for the tire frame in a case in which the coating resin layer includes a polyamide-based thermoplastic resin or polyamide-based thermoplastic elastomer).

-Polyamide-based Thermoplastic Elastomer-

The term "polyamide-based thermoplastic elastomer" refers to a thermoplastic resin material consisting of a copolymer including a polymer forming a crystalline hard segment having a high melting point and a polymer forming an amorphous soft segment having a low glass transition temperature, the thermoplastic resin material having an amide bond (-CONH-) in the main chain of the polymer forming a hard segment.

Examples of the polyamide-based thermoplastic elastomer include, for example, a material in which at least polyamide forms a crystalline hard segment having a high melting point, and another polymer (for example, polyester or polyether) forms an amorphous soft segment having a low glass transition temperature. Further, the polyamide-based thermoplastic elastomer may be formed using a chain-length extender such as a dicarboxylic acid, in addition to hard segments and soft segments.

Specific examples of the polyamide-based thermoplastic elastomer include an amide-based thermoplastic elastomer (TPA) specified in JIS K6418: 2007 and a polyamide-based elastomer described in JP-A No. 2004-346273.

According to the polyamide-based thermoplastic elastomer, examples of the polyamide forming a hard segment include a polyamide produced by a monomer represented by the following Formula (1) or (2).

Formula (1): $H_2N\text{-}R^1\text{-}COOH$

In Formula (1), $R^1$ represents a molecular chain of a hydrocarbon having 2 to 20 carbon atoms (for example, an alkylene group having 2 to 20 carbon atoms).

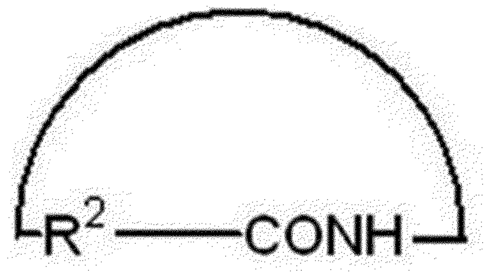

Formula (2)

In Formula (2), $R^2$ represents a molecular chain of a hydrocarbon having 3 to 20 carbon atoms (for example, an alkylene group having 3 to 20 carbon atoms).

In Formula (1), $R^1$ is preferably a molecular chain of a hydrocarbon having 3 to 18 carbon atoms (for example, an alkylene group having 3 to 18 carbon atoms), more preferably a molecular chain of a hydrocarbon having 4 to 15 carbon atoms (for example, an alkylene group having 4 to 15 carbon atoms), particularly preferably a molecular chain of a hydrocarbon having 10 to 15 carbon atoms (for example, an alkylene group having 10 to 15 carbon atoms).

In Formula (2), $R^2$ is preferably a molecular chain of a hydrocarbon having 3 to 18 carbon atoms (for example, an alkylene group having 3 to 18 carbon atoms), more preferably a molecular chain of a hydrocarbon having 4 to 15 carbon atoms (for example, an alkylene group having 4 to 15 carbon atoms), particularly preferably a molecular chain of a hydrocarbon having 10 to 15 carbon atoms (for example, an alkylene group having 10 to 15 carbon atoms).

Examples of the monomer represented by Formula (1) or (2) include ω-aminocarboxylic acids and lactams. Examples of the polyamide forming a hard segment include polycondensates of these ω-aminocarboxylic acids or lactams, and copolymers of diamines and dicarboxylic acids.

Examples of co-aminocarboxylic acids include aliphatic ω-aminocarboxylic acids having 5 to 20 carbon atoms such as 6-aminocaproic acid, 7-aminoheptanoic acid, 8-aminooctanoic acid, 10-aminocapric acid, 11-aminoundecanoic acid, and 12-aminododecanoic acid. Examples of lactams include aliphatic lactams having 5 to 20 carbon atoms such as lauryl lactam, ε-caprolactam, undecane lactam, ω-enantholactam, and 2-pyrrolidone.

Examples of diamines include diamine compounds such as aliphatic diamines having 2 to 20 carbon atoms, for example, ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and m-xylylenediamine.

Dicarboxylic acids can be represented by $HOOC-(R^3)_m-COOH$($R^3$: a molecular chain of a hydrocarbon having 3 to 20 carbon atoms, m: 0 or 1). Examples thereof include, for example, aliphatic dicarboxylic acids having 2 to 20 carbon atoms such as oxalic acid, succinic acid, glutaric acid, adipic acid, pimelic acid, suberic acid, azelaic acid, sebacic acid, and dodecanedioic acid.

As the polyamide forming a hard segment, a polyamide obtained by performing ring-opening polycondensation of lauryl lactam, ε-caprolactam, or undecane lactam can be preferably used.

Examples of the polymer forming a soft segment include, for example, polyester and polyether. Specific examples thereof include polyethylene glycol, polypropylene glycol, polytetramethylene ether glycol, and ABA-type triblock polyether. These may be used singly or in combination of two or more kinds thereof. Further, a polyether diamine or the like obtained by reacting the terminal of polyether with ammonia or the like can also be used.

Here, the "ABA-type triblock polyether" means a polyether represented by the following Formula (3).

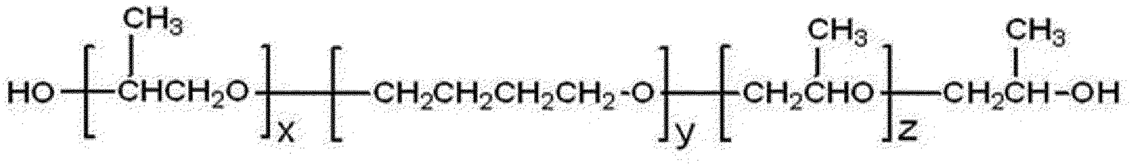

Formula (3)

[In Formula (3), x and z each represent an integer of 1 to 20, and y represents an integer of 4 to 50.]

In Formula (3), x and z are each preferably an integer of 1 to 18, more preferably an integer of 1 to 16, still more preferably an integer of 1 to 14, and particularly preferably an integer of 1 to 12. In addition, in Formula (3), y is preferably an integer of 5 to 45, more preferably an integer of 6 to 40, still more preferably an integer of 7 to 35, and particularly preferably an integer of 8 to 30.

Examples of a combination of a hard segment and a soft segment include a combination of any of the hard segments mentioned above and any of the soft segments mentioned above. Of these, as a combination of a hard segment and a soft segment, a combination of a ring-opening polycondensate of lauryl lactam and polyethylene glycol, a combination of a ring-opening polycondensate of lauryl lactam and polypropylene glycol, a combination of a ring-opening polycondensate of lauryl lactam and polytetramethylene ether glycol, or a combination of a ring-opening polycondensate of lauryl lactam and an ABA type triblock polyether is preferable, and a combination of a ring-opening polycondensate of lauryl lactam and an ABA-type triblock polyether is more preferable.

The number average molecular weight of the polymer forming a hard segment (i.e., polyamide) is preferably from 300 to 15,000 from the viewpoint of melt moldability. The number average molecular weight of the polymer forming a soft segment is preferably from 200 to 6000 from the viewpoint of toughness and low temperature flexibility. Further, the mass ratio (x: y) of hard segments (x) to soft segments (y) is preferably from 50:50 to 90:10, more preferably from 50:50 to 80:20 from the viewpoint of moldability.

The polyamide-based thermoplastic elastomer can be synthesized by copolymerizing the polymer forming a hard segment and the polymer forming a soft segment by a known method.

Examples of commercially available products of the polyamide-based thermoplastic elastomer which can be used include, for example, "UBESTA XPA" Series (for example, XPA9063X1, XPA9055X1, XPA9048X2, XPA9048X1, XPA9040X1, and XPA9040X2XPA9044) manufactured by Ube Industries, Ltd. and "VESTAMID" Series (for example, E40-S3, E47-S1, E47-S3, E55-S1, E55-S3, EX9200, and E50-R2) manufactured by Daicel-Evonik Ltd.

Polyamide-based thermoplastic elastomers are suitable as resin materials because they satisfy the performance required for a tire frame from the viewpoints of elastic modulus (i.e., flexibility), strength, and the like. In addition, polyamide-based thermoplastic elastomers often have favorable adhesion property to thermoplastic resins and thermoplastic elastomers.

-Polystyrene-based Thermoplastic Elastomer-

Examples of a polystyrene-based thermoplastic elastomer include, for example, a material in which at least polystyrene forms a hard segment, and another polymer (for example, polybutadiene, polyisoprene, polyethylene, hydrogenated polybutadiene, or hydrogenated polyisoprene) forms an amorphous soft segment having a low glass transition temperature. As the polystyrene forming a hard segment, for example, polystyrene obtained by a known radical polymerization method, ionic polymerization method, or the like is preferably used. Specific examples thereof include polystyrene formed by anionic living polymerization. Examples of the polymer forming a soft segment include polybutadiene, polyisoprene, and poly(2,3-dimethyl-butadiene).

Examples of a combination of a hard segment and a soft segment include a combination of any of the hard segments mentioned above and any of the soft segments mentioned above. Of these, as a combination of a hard segment and a soft segment, a combination of polystyrene and polybutadiene or a combination of polystyrene and polyisoprene is preferable. Further, in order to suppress an unintended cross-linking reaction of the thermoplastic elastomer, it is preferable that the soft segment is hydrogenated.

The number average molecular weight of the polymer forming a hard segment (i.e., polystyrene) is preferably from 5000 to 500,000, more preferably from 10,000 to 200,000.

The number average molecular weight of the polymer forming a soft segment is preferably from 5000 to 1,000,000, more preferably from 10,000 to 800,000, and still more preferably from 30,000 to 500,000. Further, the volume ratio (x: y) of hard segments (x) to soft segments (y) is preferably from 5:95 to 80:20, more preferably from 10:90 to 70:30 from the viewpoint of moldability.

The polystyrene-based thermoplastic elastomer can be synthesized by copolymerizing the polymer forming a hard segment and the polymer forming a soft segment by a known method.

Examples of a polystyrene-based thermoplastic elastomer include, for example, styrene-butadiene copolymers [for example, SBS (polystyrene-poly(butylene) block-polystyrene) and SEBS (polystyrene-poly(ethylene/butylene) block-polystyrene)], styreneisoprene copolymers (polystyrene-polyisoprene block-polystyrene), and styrene-propylene copolymers [for example, SEP (polystyrene- (ethylene/propylene) block), SEPS (polystyrene-poly(ethylene/propylene) block-polystyrene), SEEPS (polystyrene-poly(ethylene-ethylene/propylene) block-polystyrene), and SEB (polystyrene (ethylene/butylene) block)]

Examples of commercially available products of the polystyrene-based thermoplastic elastomer which can be used include, for example, "TUFTEC" Series (for example, H1031, H1041, H1043, H1051, H1052, H1053, H1062, H1082, H1141, H1221, and H1272) manufactured by Asahi Kasei Corporation and "SEBS" Series (for example, 8007

and 8076) and "SEPS" Series (for example, 2002 and 2063) manufactured by Kuraray Co., Ltd.

-Polyurethane-based Thermoplastic Elastomer--

Examples of a polyurethane-based thermoplastic elastomer include, for example, a material in which at least polyurethane forms a hard segment that forms a pseudo-crosslink by physical aggregation, and another polymer form an amorphous soft segment having a low glass transition temperature.

Specific examples of the polyurethane-based thermoplastic elastomer include a polyurethane-based thermoplastic elastomer (TPU) specified in JIS K6418: 2007. The polyurethane-based thermoplastic elastomer can be expressed as a copolymer including a soft segment including a unit structure represented by the following Formula A and a hard segment including a unit structure represented by the following Formula B.

Formula A

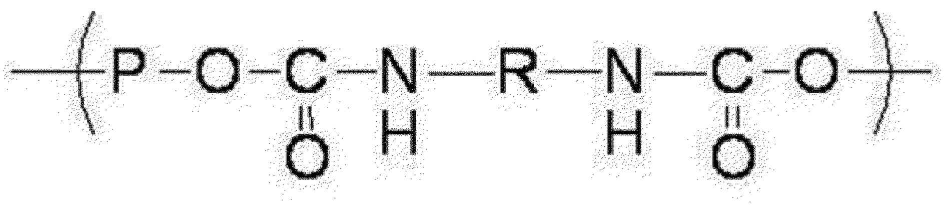

Formula B

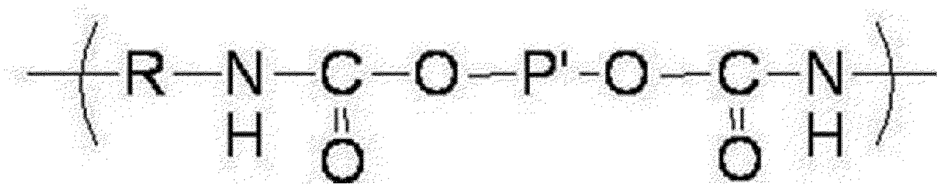

In the Formulae, P represents a long-chain aliphatic polyether or a long-chain aliphatic polyester. R represents an aliphatic hydrocarbon, an alicyclic hydrocarbon, or an aromatic hydrocarbon. P' represents a short-chain aliphatic hydrocarbon, an alicyclic hydrocarbon, or an aromatic hydrocarbon.

In Formula A, as a long-chain aliphatic polyether or a long-chain aliphatic polyester represented by P, for example, those having a molecular weight of from 500 to 5000 can be used. P is derived from a diol compound including a long-chain aliphatic polyether or a long-chain aliphatic polyester represented by P. Examples of such a diol compound include, for example, polyethylene glycol, polypropylene glycol, polytetramethylene ether glycol, poly(butylene adipate)diol, poly-s-caprolactone diol, poly(hexamethylene carbonate)diol, and ABA-type triblock polyether, each of which has a molecular weight within the above range.

These may be used singly or in combination of two or more kinds thereof.

In Formulae A and B, R is a partial structure introduced using a diisocyanate compound including an aliphatic hydrocarbon, an alicyclic hydrocarbon, or an aromatic hydrocarbon represented by R. Examples of an aliphatic diisocyanate compound including an aliphatic hydrocarbon represented by R include, for example, 1,2-ethylene diisocyanate, 1,3-propylene diisocyanate, 1,4-butane diisocyanate, and 1,6-hexamethylene diisocyanate. In addition, examples of a diisocyanate compound including an alicyclic hydrocarbon represented by R include, for example, 1,4-cyclohexane diisocyanate and 4,4-cyclohexane diisocyanate. Further, examples of an aromatic diisocyanate compound including an aromatic hydrocarbon represented by R include, for example, 4,4'-diphenylmethane diisocyanate and tolylene diisocyanate.

These may be used singly or in combination of two or more kinds thereof.

In Formula B, as a short-chain aliphatic hydrocarbon, alicyclic hydrocarbon, or aromatic hydrocarbon represented by P', for example, those having a molecular weight of less than 500 can be used. P' is derived from a diol compound containing a short-chain aliphatic hydrocarbon, alicyclic hydrocarbon, or aromatic hydrocarbon represented by P'. Examples of an aliphatic diol compound containing a short-chain aliphatic hydrocarbon represented by P' include, for example, glycol and polyalkylene glycol. Specific examples thereof include ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.

In addition, examples of an alicyclic diol compound containing an alicyclic hydrocarbon represented by P' include, for example, cyclopentane-1,2-diol, cyclohexane-1,2-diol, cyclohexane-1,3-diol, cyclohexane-1,4-diol, and cyclohexane-1,4-dimethanol.

Further, examples of an aromatic diol compound containing an aromatic hydrocarbon represented by P' include,

for example, hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenylether, 4,4'-dihydroxydiphenylsulfide, 4,4'-dihydroxydiphenylsulfone, 4,4'-dihydroxybenzophenone, 4,4'-dihydroxydiphenylmethane, bisphenol A, 1,1-di (4-hydroxyphenyl)cyclohexane, 1,2-bis(4-hydroxyphenoxy)ethane, 1,4-dihydroxynaphthalene, and 2,6-dihydroxynaphthalene.

These may be used singly or in combination of two or more kinds thereof.

The number average molecular weight of the polymer forming a hard segment (i.e., polyurethane) is preferably from 300 to 1,500 from the viewpoint of melt moldability. The number average molecular weight of the polymer forming a soft segment is preferably from 500 to 20000, more preferably from 500 to 5,000, and still more preferably from 500 to 3000 from the viewpoints of flexibility and thermal stability of polyurethane-based thermoplastic elastomers. In addition, the mass ratio (x: y) of hard segments (x) to soft segments (y) is preferably from 15:85 to 90:10, more preferably from 30:70 to 90:10 from the viewpoint of moldability.

The polyurethane-based thermoplastic elastomer can be synthesized by copolymerizing the polymer forming a hard segment and the polymer forming a soft segment by a known method. As the polyurethane-based thermoplastic elastomer, for example, a thermoplastic polyurethane described in JP-A No. 5-331256 can be used.

Specifically, as the polyurethane-based thermoplastic elastomer, a combination of a hard segment consisting of an aromatic diol and an aromatic diisocyanate and a soft segment consisting of a polycarbonate ester is preferable. More specifically, at least one selected from a tolylene diisocyanate (TDI)/polyester-based polyol copolymer, a TDI/polyether-based polyol copolymer, a TDI/caprolactone-based polyol copolymer, a TDI/polycarbonate-based polyol copolymer, a 4,4'-diphenylmethane diisocyanate (MDI)/polyester-based polyol copolymer, an MDI/polyether-based polyol copolymer, an MDI/caprolactone-based polyol copolymer, an MDI/polycarbonate-based polyol copolymer, or an MDI + hydroquinone/polyhexamethylene carbonate copolymer is preferable. Of these, at least one selected from a TDI/polyester-based polyol copolymer, a TDI/polyether-based polyol copolymer, an MDI/polyester polyol copolymer, an MDI/polyether-based polyol copolymer, or an MDI + hydroquinone/polyhexamethylene carbonate copolymer is more preferable.

In addition, examples of commercially available products of the polyurethane-based thermoplastic elastomer which can be used include, for example, "ELASTOLLAN" Series (for example, ET680, ET880, ET690, and ET890) manufactured by BASF, "KURAMIRON U" Series (for example, 2000s, 3000s, 8000s, and 9000s) manufactured by Kuraray Co., Ltd., and "MIRACTRAN" Series (for example, XN-2001, XN-2004, P390RSUP, P480RSUI, P26MRNAT, E490, E590, and P890) manufactured by Nippon Miractran Co., Ltd.

-Olefin-based Thermoplastic Elastomer-

Examples of the olefin-based thermoplastic elastomer include, for example, a material in which at least polyolefin forms a crystalline hard segment having a high melting point, and another polymer (for example, another polyolefin or polyvinyl compound) forms an amorphous soft segment having a low glass transition temperature. Examples of the polyolefin forming a hard segment include, for example, polyethylene, polypropylene, isotactic polypropylene, and polybutene.

Examples of the olefin-based thermoplastic elastomer include olefin-$\alpha$-olefin random copolymers and olefin block copolymers. Specific examples thereof include propylene block copolymer, ethylene-propylene copolymer, propylene-1-hexene copolymer, propylene-4-methyl-1-pentene copolymer, propylene-1-butene copolymer, ethylene-1-hexene copolymer, ethylene-4-methyl-pentene copolymer, ethylene-1-butene copolymer, 1-butene-1-hexene copolymer, 1-butene-4-methyl-pentene, ethylene-methacrylic acid copolymer, ethylene-methyl methacrylate copolymer, ethylene-ethyl methacrylate copolymer, ethylene-butyl methacrylate copolymer, ethylene-methylacrylate copolymer, ethylene-ethyl acrylate copolymer, ethylene-butyl acrylate copolymer, propylene-methacrylic acid copolymer, propylene-methyl methacrylate copolymer, propylene-ethyl methacrylate copolymer, propylene-butyl methacrylate copolymer, propylene-methylacrylate copolymer, propylene-ethyl acrylate copolymer, propylene-butyl acrylate copolymer, ethylene-vinyl acetate copolymer, and propylene-vinyl acetate copolymer.

Of these, as the olefin-based thermoplastic elastomer, at least one selected from propylene block copolymer, ethylene-propylene copolymer, propylene-1-hexene copolymer, propylene-4-methyl-1-pentene copolymer, propylene-1-butene copolymer, ethylene-1-hexene copolymer, ethylene-4-methyl-pentene copolymer, ethylene-1-butene copolymer, ethylene-methacrylic acid copolymer, ethylene-methyl methacrylate copolymer, ethylene-ethyl methacrylate copolymer, ethylene-butyl methacrylate copolymer, ethylene-methylacrylate copolymer, ethylene-ethyl acrylate copolymer, ethylene-butyl acrylate copolymer, propylene-methacrylic acid copolymer, propylene-methyl methacrylate copolymer, propylene-ethyl methacrylate copolymer, propylene-butyl methacrylate copolymer, propylene-methylacrylate copolymer, propylene-ethyl acrylate copolymer, propylene-butyl acrylate copolymer, ethylene-vinyl acetate copolymer, or propylene-vinyl acetate copolymer is preferable, and at least one selected from ethylene-propylene copolymer, propylene-1-butene copolymer, ethylene-1-butene copolymer, ethylene-methyl methacrylate copolymer, ethylene-methylacrylate copolymer, ethylene-ethyl acrylate copolymer, or ethylene-butyl acrylate copolymer is more preferable.

Two or more kinds of olefin resins such as ethylene and propylene may be used in combination. The content of the olefin resin in the olefin-based thermoplastic elastomer is preferably from 50% by mass to 100% by mass.

The number average molecular weight of the olefin-based thermoplastic elastomer is preferably from 5000 to 10000000. When the number average molecular weight of the olefin-based thermoplastic elastomer is from 5000 to 10000000, the mechanical properties of the thermoplastic resin material are sufficient, and the workability is also excellent. From the same viewpoint, the number average molecular weight of the olefin-based thermoplastic elastomer is more preferably from 7,000 to 1,000,000, particularly preferably from 10,000 to 1,000,000. Thus, the mechanical properties and workability of the thermoplastic resin material can be further improved. The number average molecular weight of the polymer forming a soft segment is preferably from 200 to 6000 from the viewpoint of toughness and low temperature flexibility. Further, the mass ratio (x: y) of hard segments (x) to soft segments (y) is preferably from 50:50 to 95:15, more preferably from 50:50 to 90:10 from the viewpoint of moldability.

The olefin-based thermoplastic elastomer can be synthesized by copolymerizing by a known method.

In addition, as the olefin-based thermoplastic elastomer, one obtained by acid-modifying the olefin-based thermoplastic elastomer may also be used.

The phrase "one obtained by acid-modifying the olefin-based thermoplastic elastomer" means bonding an unsaturated compound having an acidic group such as a carboxylic acid group, a sulfuric acid group, or a phosphoric acid group to an olefin-based thermoplastic elastomer.

Examples of bonding an unsaturated compound having an acidic group such as a carboxylic acid group, a sulfuric acid group, or a phosphoric acid group to an olefin-based thermoplastic elastomer include, for example, bonding an unsaturated bond site of an unsaturated carboxylic acid (for example, usually maleic anhydride) as an unsaturated compound having an acidic group to an olefin-based thermoplastic elastomer (for example, graft polymerization).

The unsaturated compound having an acidic group is preferably an unsaturated compound having a carboxylic acid group, which is a weak acid group, from the viewpoint of suppressing deterioration of the olefin-based thermoplastic elastomer. Examples of the unsaturated compound having an acidic group include, for example, acrylic acid, methacrylic acid, itaconic acid, crotonic acid, isocrotonic acid, and maleic acid.

Examples of commercially available products of the olefin-based thermoplastic elastomer which can be used include, for example: "TAFMER" Series (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680) manufactured by Mitsui Chemicals, Inc.; "NUCREL" Series (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, N035C) and "ELVALOY AC" Series (for example, 1125AC, 1209AC, 1218AC, 1609AC, 1820AC, 1913AC, 2112AC, 2116AC, 2615AC, 2715AC, 3117AC, 3427AC, and 3717AC) manufactured by Du Pont-Mitsui Polychemicals Co., Ltd..; "ACRYFT" Series, "EVATATE" Series, and the like manufactured by Sumitomo Chemical Co., Ltd.; "ULTRASEN" Series and the like manufactured by Tosoh Corporation; and "PRIME TPO" Series (for example, E-2900H, F-3900H, E-2900, F-3900, J-5900, E-2910, F-3910, J-5910, E-2710, F-3710, J-5910, E-2740, F-3740, R110MP, R110E, T310E, and M142E) manufactured by Prime Polymer Co., Ltd.

-Polyester-based Thermoplastic Elastomer-

Examples of the polyester-based thermoplastic elastomer include, for example, a material in which at least polyamide forms a crystalline hard segment having a high melting point, and another polymer (for example, polyester or polyether) forms an amorphous soft segment having a low glass transition temperature.

As the polyester forming a hard segment, for example, an aromatic polyester can be used. An aromatic polyester can be formed from, for example, an aromatic dicarboxylic acid or an ester-forming derivative thereof and an aliphatic diol. The aromatic polyester is preferably polybutylene terephthalate derived from at least one of terephthalic acid or dimethyl terephthalate and 1,4-butanediol. In addition, the aromatic polyester may be, for example, a polyester derived from: a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethanedicarboxylic acid, 5-sulfoisophthalic acid, or an ester-forming derivative thereof; and a diol component of a diol having a molecular weight of 300 or less (for example, aliphatic diol such as ethylene glycol, trimethylene glycol, pentamethylene glycol, hexamethylene glycol, neopentyl glycol, or decamethylene glycol; alicyclic diol such as 1,4-cyclohexanedimethanol or tricyclodecanedimethylol; aromatic diol such as sylylene glycol, bis(p-hydroxy)diphenyl, bis(p-hydroxyphenyl)propane, 2,2-bis[4-(2-hydroxyethoxy)phenyl]propane, bis[4-(2-hydroxy) phenyl]sulfone, 1,1-bis[4-(2-hydroxyethoxy)phenyl]cyclohexane, 4,4'-dihydroxy-p-terphenyl, 4,4'-dihydroxy-p-quarterphenyl; or the like). Alternatively, the polyester may be a copolymerized polyester in which two or more kinds of these dicarboxylic acid components and diol components are used in combination. It is also possible to copolymerize a trifunctional or higher polyfunctional carboxylic acid component, a polyfunctional oxyic acid component, a polyfunctional hydroxy component, and the like in a range of 5 mol% or less.

Examples of the polyester forming a hard segment include, for example, polyethylene terephthalate, polybutylene terephthalate, polymethylene terephthalate, polyethylene naphthalate, and polybutylene naphthalate, and polybutylene terephthalate is preferable.

Examples of the polymer forming a soft segment include, for example, aliphatic polyester and aliphatic polyether.

Examples of aliphatic polyether include poly(ethylene oxide)glycol, poly(propylene oxide)glycol, poly(tetramethylene oxide)glycol, poly(hexamethylene oxide)glycol, copolymer of ethylene oxide and propylene oxide, ethylene oxide addition polymer of poly(propylene oxide)glycol, and copolymer of ethylene oxide and tetrahydrofuran.

Examples of aliphatic polyester include poly(ε-caprolactone), polyenantholactone, polycaprilolactone, polybutylene adipate, and polyethylene adipate.

Of these aliphatic polyethers and aliphatic polyesters, the polymer forming a soft segment is preferably poly(tetramethylene oxide) glycol, an ethylene oxide adduct of poly (propylene oxide) glycol, poly(ε-caprolactone), polybutylene adipate, polyethylene adipate, or the like from the viewpoint of the elastic properties of the obtained polyester block copolymer.

The number average molecular weight of the polymer forming a soft segment is preferably from 300 to 6000 from the viewpoint of toughness and low temperature flexibility. Further, the mass ratio (x: y) of hard segments (x) to soft segments (y) is preferably from 99:1 to 20:80, more preferably from 98:2 to 30:70 from the viewpoint of moldability.

Examples of a combination of a hard segment and a soft segment described above include, for example, a combination of any of the hard segments mentioned above and any of the soft segments mentioned above. Of these, as a combination of a hard segment and a soft segment described above, a combination in which the hard segment is polybutylene terephthalate and the soft segment is aliphatic polyether is preferable, and a combination in which the hard segment is polybutylene terephthalate and the soft segment is poly(ethylene oxide)glycol is more preferable.

Examples of commercially available products of the polyester-based thermoplastic elastomer which can be used include, for example, "HYTREL" Series (for example, 3046, 5557, 6347, 4047N, and 4767N) manufactured by DU PONT-TORAY CO., LTD. and "PELPRENE" Series (for example, P30B, P40B, P40H, P55B, P70B, P150B, P280B, E450B, P150M, S1001, S2001, S5001, S6001, and S9001) manufactured by Toyobo Co., Ltd.

The polyester-based thermoplastic elastomer can be synthesized by copolymerizing the polymer forming a hard segment and the polymer forming a soft segment by a known method.

-Other Components-

An elastic material (i.e., rubber material or resin material) may include components other than a rubber or resin, as desired. Examples of other components include, for example, resins, rubbers, various fillers (for example, silica, calcium carbonate, and clay), anti-aging agents, oils, plasticizers, colorants, weathering agents, and reinforcing materials.

-Physical Properties of Elastic Material (Resin Material) -

In a case in which a resin material is used as an elastic material (i.e., in the case of a tire frame for a resin tire), the melting point of the resin contained in the resin material may be, for example, from about 100°C to 350°C, and the melting point is preferably from about 100°C to 250°C, more preferably from 120°C to 250°C from the viewpoint of tire durability and productivity

The tensile elastic modulus of the resin material (for example, tire frame) itself specified in JIS K7113: 1995 is preferably from 50 MPa to 1000 MPa, more preferably from 50 MPa to 800 MPa, particularly preferably from 50 MPa to 700 MPa. When the tensile elastic modulus of the resin material is from 50 MPa to 1000 MPa, fitting to a rim can be efficiently performed while maintaining the shape of the tire frame.

The tensile strength of the resin material (e.g., tire frame) itself specified in JIS K7113 (1995) is usually from about 15 MPa to 70 MPa, preferably from 17 MPa to 60 MPa, still more preferably from 20 MPa to 55 MPa.

The tensile yield strength of the resin material (for example, tire frame) itself specified in JIS K7113 (1995) is preferably 5 MPa or more, more preferably from 5 MPa to 20 MPa, particularly preferably from 5 MPa to 17 MPa. When the tensile yield strength of the resin material is 5 MPa or more, a tire can withstand deformation due to a load applied thereto during traveling or the like.

The tensile yield elongation specified in JIS K7113 (1995) of the resin material (for example, tire frame) itself is preferably 10% or more, more preferably from 10% to 70%, particularly preferably from 15% to 60%. When the tensile yield elongation of the resin material is 10% or more, the elastic region is large, and fittability to a rim can be improved.

The tensile elongation at break specified in JIS K7113 (1995) of the resin material (for example, tire frame) itself is preferably 50% or more, more preferably 100% or more, particularly preferably 150% or more, most preferably 200% or more. When the tensile elongation at break of the resin material is 50% or more, fittability to a rim is favorable, and breakage is unlikely to occur due to a collision.

The deflection temperature under load (at a load of 0.45 MPa) specified in ISO 75-2 or ASTM D648 of the resin material (for example, tire frame) itself is preferably 50°C or higher, more preferably from 50°C to 150°C, particularly

preferably from 50°C to 130°C. When the deflection temperature under load of the resin material is 50°C or higher, deformation of the tire frame can be suppressed even when vulcanization is performed in the manufacturing of the tire.

<Tire Structure>

Hereinafter, the tire according to the present embodiment will be described with reference to the drawings.

Each of the figures shown below (that is, FIGS. 1A, 1B, 2 to 3, and 4 to 8) is a schematic view, and the size and shape of each part may be exaggerated in order to facilitate understanding. Members having substantially the same function are designated by the same reference numeral throughout the drawings, and duplicate description may be omitted.

(First Embodiment)

First, a tire 10 according to the first embodiment will be described with reference to FIGS. 1A and 1B.

FIG. 1A is a perspective view showing a cross section of a part of the tire according to the first embodiment. FIG. 1B is a cross-sectional view of a bead portion attached to a rim. As shown in FIG. 1A, the tire 10 according to the first embodiment has a cross-sectional shape substantially similar to that of a conventional ordinary rubber pneumatic tire.

The tire 10 has a tire frame 17 consisting of a pair of bead portions 12 contacting a bead sheet 21 of a rim 20 and a rim flange 22, side portions 14 extending from the bead portions 12 outwardly in the tire radial direction, and a crown portion (i.e., outer circumferential portion) 16 connecting a tire radial outer end of one side portion 14 and a tire radial outer end of the other side portion 14. The tire frame 17 is formed with a resin material (for example, polyamide-based thermoplastic elastomer).

The tire frame 17 is formed by allowing annular tire frame half bodies (i.e., tire frame pieces) 17A having the same shape, each of which has been obtained by integrally injection-molding one bead portion 12, one side portion 14, and a half-width portion of the crown portion 16, to face each other, and joining the tire frame half bodies at the equatorial plane of the tire.

An annular bead core 18 consisting of a steel cord is embedded in each bead portion 12, similarly to a conventional ordinary pneumatic tire. An annular seal layer 24 including a rubber, which is a material having better sealing performance than that of the resin material constituting the tire frame 17, is formed at a portion of the bead portion 12 that contacts the rim 20 or at least a portion that contacts the rim flange 22 of the rim 20.

A resin cord member 26 formed with the resin-metal composite member for a tire according to the present embodiment is spirally wound around the crown portion 16 in the circumferential direction of the tire frame 17 as a reinforcing cord in a state in which at least a part of the resin cord member 26 is embedded in the crown portion 16 in a cross-sectional view along the axial direction of the tire frame 17. A tread 30 containing a rubber, which is a material having better wear resistance than that of the resin material constituting the tire frame 17, is arranged on the outer circumferential side of the resin cord member 26 in the tire radial direction. Details of the resin cord member 26 will be described later.

In the tire 10 according to the first embodiment, the tire frame 17 is made of a resin material. The tire frame half bodies 17A have symmetrical shapes, that is, one tire frame half body 17A and the other tire frame half body 17A have the same shape. Therefore, only one type of mold for molding a tire frame half body 17A is required, which is advantageous.

In the tire 10 according to the first embodiment, the tire frame 17 is formed with a single resin material, but this aspect is not limitative. Similar to a conventional ordinary rubber pneumatic tire, a resin material having different characteristics may be used for each portion (for example, side portion 14, crown portion 16, or bead portion 12) of the tire frame 17. In addition, a reinforcing material (for example, polymer material, metal fibers, cord, non-woven fabric, or woven fabrics) may be disposed to be embedded in each portion (for example, side portion 14, crown portion 16, or bead portion 12) of the tire frame 17 to reinforce the tire frame 17 with the reinforcing material.

In the tire 10 according to the first embodiment, the tire frame half body 17A is molded by injection molding. The manner of molding is not limited thereto, and, for example, the tire frame half body 17A may be molded by vacuum forming, pressure molding, melt casting, or the like. In the tire 10 according to the first embodiment, the tire frame 17 is formed by joining two members (for example, tire frame half bodies 17A). The manner of forming the tire frame 17 is not limited thereto, and the tire frame as an integral member may be formed by a molten core method using a low melting point metal, a split core method, or blow molding, or formed by joining three or more members.

An annular bead core 18 consisting of a metal cord such as a steel cord is embedded in the bead portion 12 of the tire 10. As the member including the bead core 18, the resin-metal composite member according to the present embodiment as described above can be used, and for example, the bead portion 12 can be formed with the resin metal composite member.

The bead core 18 may be formed with an organic fiber cord, a resin-coated organic fiber cord, or a hard resin,

as an alternative to a steel cord. The bead core 18 may be omitted as long as the rigidity of the bead portion 12 is ensured and the fittability to the rim 20 is favorable.

An annular seal layer 24 containing a rubber is formed at a portion of the bead portion 12 that contacts the rim 20 or at least a portion of the rim 20 that contacts the rim flange 22. The seal layer 24 may also be formed at a portion where the bead portion 12 of the tire frame 17 and the bead sheet 21 contact each other. When a rubber is used as a material for forming the seal layer 24, it is preferable to use a rubber of the same type as the rubber used for the outer surface of the bead portion of a conventional ordinary rubber pneumatic tire. The seal layer 24 formed with the rubber may be omitted as long as the sealing performance between the tire frame 17 and the rim 20 can be ensured only by the resin material forming the tire frame 17.

The seal layer 24 may be formed by using other thermoplastic resins or thermoplastic elastomers having better sealing performance than the resin material forming the tire frame 17. Examples of such other thermoplastic resins include resins such as polyurethane-based resins, olefin-based resins, polystyrene-based resins, and polyester-based resins, and blends of these resins with rubbers or elastomers. Further, thermoplastic elastomers can also be used, and examples thereof include polyester-based thermoplastic elastomers, polyurethane-based thermoplastic elastomers, olefin-based thermoplastic elastomers, combinations of these elastomers, and blends of these elastomers with rubbers.

Next, a reinforcing belt member formed with the resin cord member 26 will be described with reference to FIG. 2. The resin-metal composite member according to the present embodiment as described above can be used for the resin cord member 26.

FIG. 2 is a cross-sectional view of the tire 10 according to the first embodiment along the tire rotation axis, and shows a state in which the resin cord member 26 is embedded in the crown portion of the tire frame 17.

As shown in FIG. 2, the resin cord member 26 is spirally wound in a cross-sectional view along the axial direction of the tire frame 17 in a state in which at least a part of the resin cord member 26 is embedded in the crown portion 16. The portion of the resin cord member 26 embedded in the crown portion 16 is in close contact with the elastic material (i.e., the rubber material or resin material) constituting the crown portion 16 of the tire frame 17. L in FIG. 2 indicates the depth, in the tire rotation axis direction, of embedding of the resin cord member 26 in the crown portion 16 of the tire frame 17. In one embodiment, the depth L of embedding of the resin cord member 26 in the crown portion 16 is 1/2 of the diameter D of the resin cord member 26.

The resin cord member 26 has a structure in which the metal member 27 (for example, a steel cord of twisted steel fibers) is used as a core, and the outer circumferential portion of the metal member 27 is covered with the coating resin layer 28 with an adhesive layer 25 disposed therebetween.

A tread 30 made of a rubber is arranged on the outer circumferential side of the resin cord member 26 in the tire radial direction. In addition, similar to a conventional rubber pneumatic tire, the tread 30 is formed with a tread pattern composed of plural grooves on the area that contacts the road surface.

In one embodiment, in the tire 10, the resin cord member 26 covered with the coating resin layer 28 containing the thermoplastic elastomer is embedded in a state of being in close contact with the tire frame 17 formed with a resin material containing a thermoplastic elastomer of the same type. Due to this configuration, the contact area between the coating resin layer 28 covering the metal member 27 and the tire frame 17 becomes large, and the fatigue durability of the resin cord member 26 and the tire frame 17 is improved, and as a result, the durability of the tire is excellent.

The depth L of embedding of the resin cord member 26 in the crown portion 16 is preferably 1/5 or more, more preferably more than 1/2, of the diameter D of the resin cord member 26. It is more preferable that the entire resin cord member 26 is embedded in the crown portion 16. In a case in which the embedment depth L of the resin cord member 26 exceeds 1/2 of the diameter D of the resin cord member 26, it will be difficult for the resin cord member 26 to protrude from the embedment portion due to its dimensions. In a case in which the entire resin cord member 26 is embedded in the crown portion 16, the surface (i.e., the outer circumferential surface) becomes flat. Even in a case in which a member is placed on the crown portion 16 in which the resin cord member 26 is embedded, it is possible to reduce air entering the portion around the resin cord member 26.

In the tire 10 according to the first embodiment, the tread 30 is made of a rubber. However, instead of the rubber, a tread made of a thermoplastic resin material having excellent wear resistance may be used.

## Resin Cord Member 26

Here, an aspect in which the resin-metal composite member according to the present embodiment is used as the resin cord member 26 will be described.

For example, the resin-metal composite member can be used to form a belt layer formed by arranging one or more cord-shaped resin-metal composite members on the outer circumferential portion of the tire frame so as to run in the circumferential direction of the tire, an interlaced belt layer in which plural cord-shaped resin-metal composite members are arranged so as to have an angle with respect to the circumferential direction of the tire and so as to intersect with each other, or the like.

The resin-metal composite member is preferably arranged such that the average distance between adjacent metal members is from 400 μm to 3200 μm, more preferably from 600 μm to 2200 μm, still more preferably from 800 μm to 1500 μm in the resin-metal composite member. In a case in which the average distance between metal members in adjacent resin-metal composite members is 400 μm or more, the weight increase of the tire is suppressed and the fuel efficiency during traveling tends to be excellent. In a case in which the average distance between metal members in adjacent resin-metal composite members is 3200 μm or less, a sufficient tire reinforcing effect tends to be obtained.
The expression "adjacent resin-metal composite members" as used herein refers to a resin-metal composite member and another resin-metal composite member closest to the resin-metal composite member, which includes both a case in which different resin-metal composite members are adjacent to each other and a case in which different parts of the same resin-metal composite member are adjacent to each other (for example, a case in which a single resin-metal composite member is wound around the outer circumference of a tire frame for plural revolutions).
The "average distance between metal members" as used herein refers to a value obtained by the following formula.

Formula: Average distance between metal members = {Belt portion width − (Metal member thickness x n)}/(n-1)

The term "belt portion" means a portion where a resin metal composite member is arranged on the outer circumferential portion of a tire frame.
In the above formula, "n" is the number of resin-metal composite members observed in a cross section obtained by cutting the tire frame on which the resin-metal composite members are arranged in a direction perpendicular to the radial direction of the tire.
In the above formula, the "belt portion width" is the length between the resin-metal composite members at both ends of the belt portion (i.e., the positions of the belt portion that are farthest from the center line of the tire frame in the left-right direction) among resin-metal composite members observed in the above cross section, the length being along the outer circumferential surface of the tire frame.
In the above formula, the "metal member thickness" is the average value of the measured values of thickness at five arbitrarily selected points. In a case in which the metal member consists of a single metal cord, the metal member thickness refers to the maximum cross-sectional diameter of the metal member (i.e., distance between two points at which the distance between arbitrarily selected two points on the contour line of the cross section of the metal member is largest). In a case in which the metal member consists of plural metal cords, the metal member thickness refers to the diameter of the smallest circle among the circles including all of the cross sections of the plural metal cords observed in the cross section of the metal members.
In a case in which metal members having different thicknesses are included in the belt portion, the thickness of the thickest metal member is taken as the "metal member thickness."
Next, a method of manufacturing a tire according to the first embodiment will be described.

[Tire Frame Molding Process]

First, the tire frame half bodies supported by a thin metal support ring are arranged to face each other. Next, a joining mold is installed so as to contact the outer circumferential surface of the abutting portion of each tire frame half body. The joining mold is configured to press a portion at or around the joint portion (i.e., abutting portion) of each tire frame half body with a predetermined pressure (not shown). Next, the portion at or around the joint portion of the tire frame half body is pressed at a temperature equal to or higher than the melting point (or softening point) of the thermoplastic resin material (in the present embodiment, the polyamide-based thermoplastic elastomer) forming the tire frame. When the joint portion of the tire frame half body is heated and pressurized by the joining mold, the joint portion melts, and the tire frame half bodies are fused to each other, as a result of which these members are integrated to form a tire frame 17.

[Resin Cord Member Molding Process]

Next, a resin cord member molding step of forming a resin cord member with the resin-metal composite member according to the present embodiment will be described.
First, for example, the metal member 27 is unwound from a reel and its surface is cleaned. Then, the outer circumferential portion of the metal member 27 is covered with an adhesive (for example, acid-modified thermoplastic elastomer) extruded from an extruder to form a layer that will become an adhesive layer 25. Further, by coating thereon the resin (for example, polyester-based thermoplastic elastomer) extruded from the extruder, a resin cord member 26,

in which the outer circumferential portion of the metal member 27 is covered with a coating resin layer 28 with the adhesive layer 25 therebetween, is formed. The obtained resin cord member 26 is wound on a reel 58.

[Resin Cord Member Winding Process]

Next, the resin cord member winding process will be described with reference to FIG. 3. FIG. 3 is an explanatory drawing for explaining an operation of providing the resin cord member to the crown portion of the tire frame using a resin cord member heating device and rollers. In FIG. 3, a resin cord member supply device 56 is provided with: a reel 58 around which a resin cord member 26 is wound; a resin cord member heating device 59 arranged on the downstream side in the cord transport direction of the reel 58; a first roller 60 arranged on the downstream side in the transport direction of the resin cord member 26; a first cylinder device 62 that moves the first roller 60 in directions in which the first roller 60 is brought into contact with and moved away from the outer circumferential surface of the tire; a second roller 64 arranged on the downstream side in the transport direction of the resin cord member 26 of the first roller 60; and a second cylinder device 66 that moves the second roller 64 in a direction in which the second roller 64 is brought into contact with and moved away from the outer circumferential surface of the tire. The second roller 64 can be used as a metal cooling roller. The surface of the first roller 60 or the second roller 64 is covered with a fluororesin (Teflon (registered trademark) in the present embodiment) in order to suppress the adhesion of the molten or softened resin material. As described above, the heated resin cord member is firmly integrated with a case resin of a tire frame 17.

The resin cord member heating device 59 includes a heater 70 and a fan 72 that generate hot air. Further, the resin cord member heating device 59 includes a heating box 74 which has an internal space into which hot air is supplied and through which the resin cord member 26 passes, and a discharge port 76 for discharging the heated resin cord member 26.

In this step, first, the temperature of the heater 70 of the resin cord member heating device 59 is raised, and the ambient air heated by the heater 70 is conveyed to the heating box 74 by the wind generated by the rotation of the fan 72. Next, the resin cord member 26 unwound from the reel 58 is conveyed into the heating box 74 of which internal space is heated by hot air, and the resin cord member 26 is heated (for example, the temperature of the resin cord member 26 is elevated to a temperature of about 100°C to about 250°C). The heated resin cord member 26 passes through the discharge port 76 and is spirally wound with a constant tension around the outer circumferential surface of the crown portion 16 of the tire frame 17 that rotates in the direction of arrow R in FIG. 3. Here, when the coating resin layer of the heated resin cord member 26 comes into contact with the outer circumferential surface of the crown portion 16, the resin material in the contact area melts or softens, and is melt-bonded to the resin of the tire frame 17 and integrated with the outer circumferential surface of the crown portion 16. At this time, since the resin cord member is also melt-bonded to an adjacent resin cord member, the resin cord members are wound without a gap. As a result, air entry into the portion where the resin cord member 26 is embedded is suppressed.

The embedment depth L of the resin cord member 26 can be adjusted by the heating temperature of the resin cord member 26, the tension acting on the resin cord member 26, the pressing force of the first roller 60, and the like. In one embodiment, the embedment depth L of the resin cord member 26 is set to be 1/5 or more of the diameter D of the resin cord member 26.

Next, a band-shaped tread 30 is wound around the outer circumferential surface of the tire frame 17 in which the resin cord member 26 is embedded, and then housed in a vulcanizing can or a mold, followed by heating (i.e., vulcanization). The tread 30 may be an unvulcanized rubber or vulcanized rubber.

Subsequently, a tire 10 is completed by adhering the seal layer 24 including the vulcanized rubber to the bead portion 12 of the tire frame 17 using an adhesive or the like.

In the method of manufacturing the tire according to the first embodiment, the joint portion of the tire frame half bodies 17A were heated using a joining mold, but the present embodiment is not limited thereto. For example, joining of the tire frame half bodies 17A may be achieved by heating the joint portion using a separately provided high frequency heater or the like, or by softening or melting the joint portion in advance through irradiation with hot air or infrared rays and pressurizing it using a joining mold.

In the method of manufacturing the tire according to the first embodiment, the resin cord member supply device 56 has two rollers, a first roller 60 and a second roller 64, but the present embodiment is not limited thereto. The resin cord member supply device 56 may alternatively have only one of the two rollers (i.e., one roller).

In the method of manufacturing the tire according to the first embodiment, one aspect in which the resin cord member 26 is heated to melt or soften the surface of the tire frame 17 at the portion contacting the heated resin cord member 26 is illustrated, but the present embodiment is not limited thereto. It is also possible to heat the outer circumferential surface of the crown portion 16 in which the resin cord member 26 is embedded using a hot air generator without heating the resin cord member 26, and then, embed the resin cord member 26 in the crown portion 16.

In addition, in the method of manufacturing the tire according to the first embodiment, one aspect in which the heat source of the resin cord member heating device 59 is a heater and a fan is illustrated, but the present embodiment

is not limited thereto. The resin cord member 26 may be directly heated by radiant heat (for example, infrared ray radiation) in another aspect.

Further, in the method of manufacturing the tire according to the first embodiment, one aspect involving forcibly cooling, by the second metal roller 64, the portion in which the thermoplastic resin material including the resin cord member 26 embedded therein is melted or softened is illustrated, but the present embodiment is not limited thereto. Cold air may be blown directly onto the melted or softened portion of the thermoplastic resin material to forcibly cool and solidify the melted or softened portion of the thermoplastic resin material in another aspect.

Although it is easy to spirally wind the resin cord member 26 in manufacturing, a method of arranging resin cord members 26 discontinuously in the width direction is also conceivable.

In the method of manufacturing the tire according to the first embodiment, one aspect in which the band-shaped tread 30 is wound around the outer circumferential surface of the tire frame 17 including the resin cord member 26 embedded therein, and then the band-shaped tread is heated (i.e., vulcanized) is illustrated, but the present embodiment is not limited thereto. A vulcanized band-shaped tread may be adhered to the outer circumferential surface of the tire frame 17 with an adhesive or the like in another aspect. Examples of the vulcanized band-shaped tread include precure tread for use in rehabilitated tires.

The tire 10 according to the first embodiment is a so-called tubeless tire in which an air chamber is formed between the tire 10 and the rim 20 by fitting the bead portion 12 to the rim 20, but the present embodiment is not limited to such an aspect. The tire 10 may have a perfect tube shape.

(Second Embodiment)

Next, a tire 110 according to the second embodiment will be described with reference to FIG. 4.

In the second embodiment, a run-flat tire having a side reinforcing rubber will be described, but the present embodiment is not limited thereto. For example, a pneumatic tire that does not have a side reinforcing rubber, in other words, a pneumatic tire that is not a run-flat tire, may be employed.

FIG. 4 shows one side of a cut surface cut along the tire width direction and the tire radial direction (i.e., a cross section seen from the direction along the tire circumferential direction) of the run-flat tire according to the second embodiment (hereinafter referred to as "tire 110"). In the figure, the arrow W indicates the width direction of the tire 110 (tire width direction), and the arrow R indicates the radial direction of the tire 110 (tire radial direction). As used herein, the tire width direction refers to a direction parallel to the rotation axis of the tire 110. Further, the tire radial direction means a direction orthogonal to the rotation axis of the tire 110. Further, the reference numeral CL indicates the equatorial plane (tire equatorial plane) of the tire 110.

In addition, in the second embodiment, a side closer to the rotation axis of the tire 110 in the tire radial direction is described as "inner side in the tire radial direction," and a side farther from the rotation axis of the tire 110 in the tire radial direction is described as "outer side in the tire radial direction." Meanwhile, a side closer to the tire equatorial plane CL in the tire width direction is described as "inner side in the tire width direction", and a side farther from the tire equatorial plane CL in the tire width direction is described as "outer side in the tire width direction".

[Tire]

FIG. 4 shows a tire 110 when assembled on a rim 130, which is a standard rim, and filled with standard air pressure. The term "standard rim" used herein refers to a rim specified by the Japan Automobile Tire Manufacturers Association (JATMA) Year Book 2017 edition. The standard air pressure is the air pressure corresponding to the maximum load capacity specified by the JATMA Year Book 2017 edition.

As shown in FIG. 4, the tire 110 is provided with: a pair of bead portions 112; a carcass 114 straddling the bead core 126 embedded in the bead portion 112 and having its end locked to the bead core 126; a bead filler 128 embedded in the bead portion 112 and extending from the bead core 126 toward the outer side in the tire radial direction along the outer surface of the carcass 114; a side reinforcing rubber 124 provided on the tire side portion 122 and extending in the tire radial direction along the inner surface of the carcass 114; a belt layer 140 provided at the outer side in the tire radial direction of the carcass 114; and a tread 120 provided at the outer side in the tire radial direction of the belt layer 140. In FIG. 4, only the bead portion 112 on one side is shown.

A tread 120 constituting an outer circumferential portion of the tire 110 is provided at the outer side in the tire radial direction of the belt layer 140. The tire side portion 122 is composed of a sidewall lower portion 122A positioned at the bead portion 112 side and a sidewall upper portion 122B positioned at the tread 120 side, and connects the bead portion 112 and the tread 120.

[Bead Portion]

A bead core 126, which is a bundle of wires, is embedded in each of the pair of bead portions (so-called bead members) 112. For these bead cores 126, the resin-metal composite member for a tire according to the present embodiment as described above is used. A carcass 114 extends to reach these bead cores 126. The bead core 126 can adopt various structures employed in pneumatic tires, such as having a circular or polygonal cross section, and, for example, a hexagonal shape can be adopted as the polygonal shape, although a rectangular shape is adopted in the second embodiment.

As shown in FIG. 5, the bead core 126 is formed by winding a single bead wire 126A (for example, a metal wire) covered with resin for plural revolutions to form stacked layers. Specifically, the bead wire 126A coated with resin is wound such that bead wire portions are arranged side by side without gap in the tire width direction to form the first row, and thereafter, rows are formed in the same manner so as to be layered, without gap, toward the outer side in the tire radial direction, thereby forming the bead core 126 having a square cross-sectional shape. At this time, the coating resins of bead wire 126A portions adjacent to each other in the tire width direction and in the radial direction are joined to each other. As a result, the bead core 126 in which the bead wire 126A corresponding to the metal member in the resin-metal composite member for a tire according to the present embodiment is covered with the coating resin (i.e., a bead coating layer) 126B corresponding to the coating resin layer is formed.

As shown in FIG. 4, in a region of the bead portion 112 surrounded by the carcass 114 (i.e., a region at the outer side of a portion of the carcass 114, the portion being arranged at the inner side in the tire width direction and located around the bead core 126), a resin-made bead filler 128 extending from the bead core 126 toward the outer side in the tire radial direction is embedded.

[Carcass]

A carcass 114 is a member forming the tire frame composed of two carcass plies 114A and 114B. The carcass ply 114A is a carcass ply arranged at the outer side in the tire radial direction on the tire equatorial plane CL, and the carcass ply 114B is a carcass ply arranged at the inner side in the tire radial direction. Each of the carcass plies 114A and 114B is formed by coating plural cords with a covering rubber including a rubber material.

The carcass 114 thus formed toroidally extends from one bead core 126 to the other bead core 126 to form the tire frame. Further, the end portion of the carcass 114 is locked to the bead core 126. Specifically, the carcass 114 is locked with the end portion thereof being folded back around the bead core 126 to form a folded-back portion located at the outer side in the tire width direction folded over a portion located at the inner side in the tire width direction. Further, the folded end portions (i.e., end portions 114AE, 114BE) of the carcass 114 are arranged at the tire side portion 122. The end portion 114AE of the carcass ply 114A is located at the inner side in the tire radial direction relative to the end portion 114BE of the carcass ply 114B.

In the second embodiment, the end portion of the carcass 114 is positioned at the tire side portion 122, but the present embodiment is not limited to this configuration. For example, the end portion of the carcass 114 may be configured to be positioned at the belt layer 140. Further, it is also possible to adopt a structure in which the end portion of the carcass 114 is not folded back, but sandwiched between plural bead cores 126 or wound around the bead core 126. As used herein, "locking" the end of the carcass 114 to the bead core 126 encompasses various embodiments, such as those described above.

In the second embodiment, a radial carcass is used as the carcass 114. The material of the cord in the carcass 114 is not particularly limited, and rayon, nylon, polyethylene naphthalate (PEN), polyethylene terephthalate (PET), aramid, glass fiber, carbon fiber, steel, or the like can be adopted. From the viewpoint of weight reduction, an organic fiber cord is preferable. The cord count of carcass is in a range of from 20 to 60/50 mm, but it is not limited to this range.

The material of a rubber in the carcass 114 is not particularly limited, and examples thereof include the aforementioned rubber components mentioned in the section of the rubber material as the elastic material.

[Belt Layer]

A belt layer (so-called reinforcing belt member) 140, which is wound in the circumferential direction and formed using the resin-metal composite member for a tire according to the present embodiment as described above, is arranged on the outer circumferential portion (i.e., outer side in the tire radial direction) of the carcass 114. As shown in FIG. 6, the belt layer 140 is a ring-shaped hoop formed by spirally winding a resin-coated cord 142 around the outer circumferential surface of the carcass 114 along the tire circumferential direction. In the second embodiment, as shown in FIG. 6, the belt layer 140 is a single layer formed by spirally winding the resin-coated cord 142 around the outer circumferential surface of the carcass 114 along the tire circumferential direction, but the present embodiment is not limited thereto. For example, plural belt layers layered in the tire radial direction may be used, and, in the case of plural layers, two layers

are preferable.

The resin-coated cord 142 is configured by coating a reinforcing cord 142C (for example, metal cord) with a coating resin 142S, the reinforcing cord 142C corresponding to the metal member in the resin-metal composite member for a tire according to the present embodiment, and the coating resin 142S corresponding to the coating resin layer (i.e., the belt coating layer). As shown in FIG. 4, the cross section of the resin-coated cord 142 is substantially square. The coating resin 142S at the inner circumferential portion of the resin-coated cord 142 in the tire radial direction is joined to the outer circumferential surface of the carcass 114 via a rubber or an adhesive. Further, the coating resin 142S at portions in the resin-coated cord 142 that are adjacent to each other in the tire width direction are integrally joined by heat fusing, an adhesive, or the like. Accordingly, the belt layer 140 (i.e., the resin-coated belt layer) consisting of the reinforcing cord 142C coated with the coating resin 142S is formed.

Although the resin-coated cord 142 is configured by coating one reinforcing cord 142C with the coating resin 142S in the second embodiment, the resin-coated cord 142 may alternatively be configured by coating plural reinforcing cords 142C with the coating resin 142S.

The bead wire 126A in the bead core 126 and the reinforcing cord 142C in the belt layer 140 in the second embodiment are steel cords. This steel cord contains steel as a main component and can include various minor components such as carbon, manganese, silicon, phosphorus, sulfur, copper, and chromium.

The present embodiment is not limited to the above configuration, and, as the bead wire 126A in the bead core 126 and the reinforcing cord 142C in the belt layer 140, monofilament cords or cords each obtained by twisting plural filaments can be used instead of steel cords. Various designs can be adopted for the twist structure, and various types of the cross-sectional structure, twist pitch, twist direction, and distance between adjacent filaments can be used. Furthermore, a cord in which filaments of different materials are twisted can be adopted. The cross-sectional structure is not particularly limited, and various twisted structures such as single-stranded, layer-stranded, and multi-stranded can be adopted.

[Tread]

A tread 120 is provided at the outer side in the tire radial direction of the belt layer 140. The tread 120 is a portion that comes into contact with the road surface during traveling, and plural circumferential grooves 150 extending in the tire circumferential direction are formed on the tread surface of the tread 120. The shape and number of the circumferential grooves 150 are appropriately set according to the performance such as drainage performance, steering stability, or the like required for the tire 110.

[Side Reinforcing Rubber]

The tire side portion 122 is configured to extend in the tire radial direction to connect the bead portion 112 and the tread 120, and bear the load acting on the tire 110 during run-flat traveling. In the tire side portion 122, a side reinforcing rubber 124 for reinforcing the tire side portion 122 is provided at the inner side in the tire width direction of the carcass 114. The side reinforcing rubber 124 is a reinforcing rubber for enabling traveling for a predetermined distance in a state in which the weights of the vehicle and the passengers are supported, in a case in which the internal pressure of the tire 110 is reduced due to tire puncture or the like.

Although the side reinforcing rubber 124 is formed of one type of rubber material in the second embodiment, the present embodiment is not limited thereto, and the side reinforcing rubber 124 may be formed with plural rubber materials. Further, the side reinforcing rubber 124 may contain other materials such as a filler, a short fiber, and a resin as long as the rubber material is the main component. In order to increase the durability during run-flat traveling, the rubber material constituting the side reinforcing rubber 124 may include a rubber material having a hardness of from 70 to 85. The hardness of rubber mentioned herein refers to the hardness specified by JIS K6253 (type A durometer). A rubber material having physical properties with a loss coefficient tan $\delta$ of 0.10 or less measured under conditions including a frequency of 20 Hz, an initial strain of 10%, a dynamic strain of $\pm$ 2%, and a temperature of 60°C using a viscoelastic spectrometer (for example, a spectrometer manufactured by Toyo Seiki Seisaku-sho, Ltd.) may be included.

The side reinforcing rubber 124 extends from the bead portion 112 side to the tread 120 side in the tire radial direction along the inner surface of the carcass 114. Further, the side reinforcing rubber 124 has a shape in which the thickness decreases from the central portion toward the bead portion 112 side and decreases from the central portion toward the tread 120 side, for example, a substantially crescent shape. The thickness of the side reinforcing rubber 124 mentioned herein refers to the length along the normal line to the carcass 114.

The lower end portion 124B of the side reinforcing rubber 124 located at the bead portion 112 side overlaps the bead filler 128 with the carcass 114 interposed therebetween when viewed from the tire width direction. The upper end portion 124A of the side reinforcing rubber 124 located at the tread 120 side overlaps the belt layer 140 when viewed from the tire radial direction. Specifically, the upper end portion 124A of the side reinforcing rubber 124 overlaps the belt

layer 140 with the carcass 114 interposed therebetween. In other words, the upper end portion 124A of the side reinforcing rubber 124 is located at the inner side in the tire width direction of the end portion 140E, which is an end portion in the tire width direction of the belt layer 140.

[Modification Example]

Although the bead core 126 is formed by winding and layering a single bead wire 126A coated with the coating resin 126B in the second embodiment, the present embodiment is not limited thereto. For example, as in the bead core 160 shown in FIG. 7, the bead core 126 may be formed by winding and layering a wire bundle of plural bead wires 160A coated with the coating resin 160B.

In this case, the interface upon layering is fused by heat fusing. The number of bead wires 160A included in one wire bundle is not limited to three, and may be two or four or more. The number of wire bundles in each layer in the wire bundle stack may be one bundle as shown in FIG. 7, or two or more bundles may be provided so as to be adjacent to each other in the tire width direction.

Although the bead filler 128 is made of a resin in the second embodiment, the present embodiment is not limited thereto. For example, the bead filler 128 may be formed with a rubber.

Although the belt layer 140 is formed by winding a substantially square resin-coated cord 142, which has been formed by coating a single reinforcing cord 142C with a coating resin 142S, around the outer circumferential surface of the carcass 114 in the second embodiment, the present embodiment is not limited thereto. For example, as in the belt layer 170 shown in FIG. 8, the belt layer 140 may be formed by winding a resin-coated cord 172 having a substantially parallel quadrilateral cross section, which has been formed by coating plural reinforcing cords 172C with the coating resin 142S, around the outer circumferential surface of the carcass 114.

Although a run-flat tire having the side reinforcing rubber 124 is described in the second embodiment, the present embodiment is not limited thereto. For example, a pneumatic tire which does not have a side reinforcing rubber, in other words, a pneumatic tire that is not a run-flat tire may be employed.

[Belt Coating Layer and Bead Coating Layer]

Although a run-flat tire in which the resin-metal composite member for a tire according to the present embodiment as described above is applied as the bead core 126 in the belt layer (so-called reinforcing belt member) 140 and the bead portion (so-called bead member) 112 is described as the tire according to the second embodiment, the present disclosure is not limited thereto.

For example, the belt layer (so-called reinforcing belt member) may have a configuration in which a reinforcing cord such as a metal cord is covered with a belt coating layer containing a resin material, or in which the reinforcing cord is covered with a belt coating layer containing a rubber material. In addition, the bead core may have a configuration in which a bead wire such as a metal wire is covered with a bead coating layer containing a resin material, or in which the bead wire is coated with a bead coating layer containing a rubber material.

In other words, a configuration may be adopted such that the belt layer has a configuration in which a reinforcing cord such as a metal cord is covered with a belt coating layer containing a resin material, and such that the bead core has a configuration in which a bead wire such as a metal wire is covered with a bead coating layer containing a rubber material (referred to as a "first rubber material"). In this case, it is preferable that the belt layer is formed using the resin-metal composite member for a tire according to this embodiment as described above. Also, in this case, the bead member may have a bead filler that contacts the bead core and that is located at least at the outer side in the tire radial direction of the bead core. The bead filler may be a rubber-made bead filler containing a rubber material (referred to as a "second rubber material").

Alternatively, a configuration may be adopted such that the belt layer has a configuration in which a reinforcing cord such as a metal cord is covered with a belt coating layer containing a rubber material, and such that the bead core has a configuration in which a bead wire such as a metal wire is covered with a bead coating layer containing a resin material (referred to as a "second resin material"). In this case, it is preferable that the bead core is formed with the resin-metal composite member for a tire according to this embodiment as described above. Also, in this case, the bead member may have a bead filler that contacts the bead core and that is located at least at the outer side in the tire radial direction of the bead core. The bead filler may be a resin-made bead filler containing a resin material (referred to as a "third resin material"). The second resin material contained in the bead coating layer and the third resin material contained in the bead filler may be the same resin material or different resin materials. However, from the viewpoint of adhesion property between the bead core and the bead filler, it is preferable that the second resin material and the third resin material contain the same type of resin.

Further, a configuration may be adopted such that the belt layer has a configuration in which a reinforcing cord such as a metal cord is covered with a belt coating layer containing a resin material (referred to as a "first resin material"),

and such that the bead core has a configuration in which a bead wire such as a metal wire is covered with a bead coating layer containing a resin material (i.e., the "second resin material"). The first resin material contained in the belt coating layer and the second resin material contained in the bead coating layer may be the same resin material or different resin materials. However, it is preferable that at least one of the belt layer or the bead core is formed with the resin-metal composite member for a tire according to this embodiment as described above. A configuration may be adopted in which each of the belt layer and the bead core is formed with the resin-metal composite member for a tire according to the present embodiment described above. Also, in this case, the bead member may have a bead filler that contacts the bead core and that is located at least at the outer side in the tire radial direction of the bead core. The bead filler may be a resin-made bead filler containing a resin material (i.e., the "third resin material"). The second resin material contained in the bead coating layer and the third resin material contained in the bead filler may be the same resin material or different resin materials. However, from the viewpoint of adhesion property between the bead core and the bead filler, it is preferable that the second resin material and the third resin material contain the same type of resin.

When the belt layer has a configuration in which a reinforcing cord such as a metal cord is coated with a belt coating layer containing a first resin material, the bead core has a configuration in which a bead wire such as a metal wire is coated with a bead coating layer containing a second resin material, and the first resin material and the second resin material are different resin materials, the melt flow rate [MFR1] of the belt coating layer at 260°C and the melt flow rate [MFR2] of the bead coating layer at 260°C may be different. In a case in which these melt flow rates are different, it is preferable that both the melt flow rate [MFR1] of the belt coating layer and the melt flow rate [MFR2] of the bead coating layer are from 0.5 g/10 min to 16.5 g/10 min, more preferably from 2 g/10 min to 16 g/10 min, still more preferably from 4 g/10 min to 15.4 g/10 min.

In particular, it is preferable that the melt flow rate [MFR1] of the belt coating layer is smaller than the melt flow rate [MFR2] of the bead coating layer. In this case, it is preferable that both the melt flow rate [MFR1] of the belt coating layer and the melt flow rate [MFR2] of the bead coating layer are from 0.5 g/10 min to 16.5 g/10 min, more preferably from 2 g/10 min to 16 g/10 min, still more preferably from 4 g/10 min to 15.4 g/10 min.

In the belt layer and the bead core, the deformation due to the load applied during traveling is larger in the belt layer located in the tread portion. In particular, the deformation becomes larger during run-flat traveling (i.e., during traveling in a state in which the internal pressure is lowered). Therefore, it is preferable that the belt coating layer in the belt layer, which undergoes a larger deformation during traveling, is made of a material having a smaller melt flow rate [MFR1], in other words, a material with higher strength against the load. Meanwhile, from the viewpoint of moldability, it is preferable that the belt coating layer is made of a material having a high melt flow rate. Accordingly, it is preferable that the bead coating layer in the bead core, which undergoes a smaller deformation during traveling than the belt layer, is made of a material having a larger melt flow rate [MFR2], in other words, a highly moldable material.

Here, as a method of making a difference in the melt flow rate between the belt coating layer and the bead coating layer, a known method can be adopted. Examples thereof include, for example, a method of selecting the type of resin contained in the first resin material and the second resin material.

The melt flow rates of the belt coating layer and the bead coating layer are measured by the following method after cutting out a sample for measurement from each layer.

The measurement method complies with JIS-K7210-1 (2014).

Specifically, the melt flow rate is measured using a melt indexer (model number: 2A-C manufactured by Toyo Seiki Seisaku-sho, Ltd.). The melt flow rate is determined under the measurement conditions including a temperature of 260°C, a load of 2.16 kg, an interval of 25 mm, and an orifice of 2.09 $\Phi \times$ 8L (mm).

Although various embodiments are described above, these embodiments are examples, and the present disclosure can be implemented with various modifications without departing from the gist thereof. It goes without saying that the scope of rights contemplated in the present disclosure is not limited to these present embodiments.

As described above, according to the present disclosure, a resin-metal composite member for a tire, a tire, and a method of manufacturing a resin-metal composite member for a tire described below are provided.

<1> According to a first aspect of the present disclosure, a resin-metal composite member for a tire is provided, the composite member comprising

a metal member and a coating resin layer that covers the metal member and contains a resin material,

wherein the resin material contains a thermoplastic elastomer, and the coating resin layer has a melt flow rate of from 0.5 g/10 min to 16.5 g/10 min.

<2> According to a second aspect of the present disclosure,

the resin-metal composite member for a tire according to the first aspect, wherein the melt flow rate of the coating resin layer is from 2 g/10 min to 16 g/10 min, is provided

<3> According to a third aspect of the present disclosure,

the resin-metal composite member for a tire according to the first aspect, wherein the melt flow rate of the coating resin layer is from 4 g/10 min to 15.4 g/10 min, is provided.

<4> According to a fourth aspect of the present disclosure,
the resin-metal composite member for a tire according to any one of the first to third aspects, wherein the resin composition has a weight average molecular weight of from 44,000 to 100,000 in terms of conversion to polymethyl methacrylate, is provided.
<5> According to a fifth aspect of the present disclosure,
the resin-metal composite member for a tire according to any one of the first to third aspects, wherein the resin composition has a weight average molecular weight of from 45,000 to 90,000 in terms of conversion to polymethyl methacrylate, is provided.
<6> According to a sixth aspect of the present disclosure,
the resin-metal composite member for a tire according to any one of the first to third aspects, wherein the resin composition has a weight average molecular weight of from 47000 to 79000 in terms of conversion to polymethyl methacrylate, is provided.
<7> According to a seventh aspect of the present disclosure,
the resin-metal composite member for a tire according to any one of the first to sixth aspects, wherein the coating resin layer has a tensile elastic modulus of from 110 MPa to 660 MPa, is provided.
<8> According to an eighth aspect of the present disclosure,
the resin-metal composite member for a tire according to any one of the first to seventh aspects, wherein the thermoplastic elastomer is a polyester-based thermoplastic elastomer, is provided.
<9> According to a ninth aspect of the present disclosure,
the resin-metal composite member for a tire according to any one of the first to eighth aspects, wherein the resin material further contains at least one additive resin selected from an amorphous resin having an ester bond or a polyester-based thermoplastic resin, is provided.
<10> According to a tenth aspect of the present disclosure,
the resin-metal composite member for a tire according to the ninth aspect, wherein the amorphous resin having an ester bond is at least one resin selected from an amorphous polyester-based thermoplastic resin or an amorphous polycarbonate-based thermoplastic resin, is provided.
<11> According to an eleventh aspect of the present disclosure,
the resin-metal composite member for a tire according to the ninth or tenth aspect, wherein the polyester-based thermoplastic resin is at least one resin selected from polybutylene terephthalate, polyethylene terephthalate, polybutylene naphthalate, or polyethylene naphthalate, is provided.
<12> According to a twelfth aspect of the present disclosure,
the resin-metal composite member for a tire according to any one of the ninth to eleventh aspects, wherein the additive resin has a weight average molecular weight of from 10,000 to 70,000, is provided
<13> According to a thirteenth aspect of the present disclosure,
the resin-metal composite member for a tire according to any one of the ninth to eleventh aspects, wherein the additive resin has a weight average molecular weight of from 20,000 to 50,000, is provided
<14> According to a fourteenth aspect of the present disclosure,
the resin-metal composite member for a tire according to any one of the ninth to eleventh aspects, wherein the additive resin has a weight average molecular weight of from 28,000 to 37,000, is provided
<15> According to a fifteenth aspect of the present disclosure,
the resin-metal composite member for a tire according to any one of the ninth to fourteenth aspects, wherein a content of the additive resin is from 5% by mass to 50% by mass with respect to the resin material, is provided.
<16> According to a sixteenth aspect of the present disclosure,
the resin-metal composite member for a tire according to any one of the first to fifteenth aspects, further comprising an adhesive layer between the metal member and the coating resin layer, is provided.
<17> According to a seventeenth aspect of the present disclosure,
the resin-metal composite member for a tire according to the sixteenth aspect, wherein the adhesive layer contains an acid-modified thermoplastic elastomer, is provided.
<18> According to an eighteenth aspect of the present disclosure,
a tire is provided, the tire comprising:
an annular carcass or tire frame containing an elastic material; and
the resin-metal composite member for a tire according to any one of the first to seventeenth aspects.
<19> According to a nineteenth aspect of the present disclosure,
the tire according to the eighteenth aspect, wherein the resin-metal composite member for a tire configures a reinforcing belt member that is wound around the outer circumferential portion of the carcass or the tire frame in a circumferential direction, is provided.
<20> According to a twentieth aspect of the present disclosure,
the tire according to the eighteenth aspect, wherein the resin-metal composite member for a tire configures a bead

member, is provided.

<21> According to a twenty-first aspect of the present disclosure,
the tire according to the eighteenth aspect, including:
the carcass, which includes a cord covered with a rubber material;
a reinforcing belt member that is wound around the outer circumferential portion of the carcass in the circumferential direction and includes a metal cord and a belt coating layer, the belt coating layer covering the metal cord and containing a first resin material; and
a bead member having a metal wire and a bead coating layer, the bead coating layer covering the metal wire and containing a second resin material,
wherein the resin-metal composite member for a tire configures at least one of the reinforcing belt member or the bead member, is provided.

<22> According to a twenty-second aspect of the present disclosure,
the tire according to the twenty-first aspect, wherein a melt flow rate of the belt coating layer is lower than a melt flow rate of the bead coating layer, is provided.

<23> According to a twenty-third aspect of the present disclosure,
the tire according to the twenty-first or twenty-second aspect, wherein the bead member comprises:

a bead core comprising the metal wire and the bead coating layer; and
a bead filler containing a third resin material, the bead filler contacting the bead core and being arranged at least at an outer side of the bead core in a tire radial direction, is provided.

<24> According to a twenty-fourth aspect of the present disclosure,
the tire according to the eighteenth aspect, including:

the carcass, which has a cord covered with a rubber material,
a reinforcing belt member that is wound around an outer circumferential portion of the carcass in the circumferential direction and is configured by the resin-metal composite member for a tire; and
a bead member that includes:

a bead core including a metal wire and a bead coating layer, the bead coating layer covering the metal wire and containing a first rubber material; and
a bead filler containing a second rubber material that is in contact with the bead core and being arranged at least at an outer side of the bead core in a tire radial direction, is provided.

<25> According to a twenty-fifth aspect of the present disclosure,
the tire according to the eighteenth aspect, including:

the carcass, which includes a cord covered with a rubber material,
a reinforcing belt member that is wound around an outer circumferential portion of the carcass in the circumferential direction and includes a metal cord and a belt coating layer, the belt coating layer covering the metal cord and containing a rubber material, and
a bead member that is configured by the resin-metal composite member for a tire, is provided.

<26> According to a twenty-sixth aspect of the present disclosure,
the tire according to any one of the twenty-first to twenty-fifth aspects, which is a run-flat tire having a side reinforcing rubber at an inner side of the carcass in a tire width direction, is provided.

<27> According to a twenty-seventh aspect of the present disclosure,
a method of manufacturing a resin-metal composite member for a tire is provided, the method including a coating resin layer forming step of applying a coating resin layer-forming composition containing a resin material onto a metal member to form a coating resin layer that covers the metal member, wherein:
the resin material contains at least a thermoplastic elastomer, and
the coating resin layer formed by the coating resin layer forming step has a melt flow rate of from 0.5 g/10 min to 16.5 g/10 min, is provided.

<28> According to a twenty-eighth aspect of the present disclosure,
the method of manufacturing a resin-metal composite member for a tire according to the twenty-seventh aspect, wherein the resin material contained in the coating resin layer formed by the coating resin layer forming step has a weight average molecular weight of from 44000 to 100000 in terms of conversion to polymethyl methacrylate, is provided.

EXAMPLES

Hereinafter, the present disclosure are specifically presented with reference to examples below, but the present disclosure is not limited to these examples. Unless otherwise specified, "part" represents part by mass.

[Examples 1 to 12 and Comparative Examples 1 to 8]

<Preparation of Resin-Metal Composite Member>

The following adhesive G -1 that has been heat-melted is applied to a multifilament with an average diameter of ø 1.15 mm (specifically, a stranded fiber in which seven ø 0.35 mm monofilaments (steel-made, tenacity: 280N, degree of elongation: 3%) are twisted), thereby forming an adhesive layer.

• Adhesive G-1: Acid-modified polyester-based thermoplastic elastomer "Primaroi-AP GQ741" with a melting point of 213°C and an elastic modulus of 587 MPa manufactured by Mitsubishi Chemical Corporation

Next, each of the compositions shown in Tables 1 to 2 extruded by an extruder (referred to as "coating resin layer-forming composition") is provided on the outer periphery of the adhesive layer, to cover the outer periphery, followed by cooling. The extrusion conditions are such that the temperature of the metal member (i.e., the multifilament) is 200°C, the temperature of the coating resin is 240°C, and the extrusion speed is 30 m/minute.

As described above, a resin-metal composite member having a structure in which the outer periphery of the multifilament (e.g., the metal member) is covered with a coating resin layer with an adhesive layer disposed therebetween is produced.

The average thickness of the thinnest part of the coating resin layer is 1.2 mm, and the average thickness of the thinnest part of the adhesive layer is 0.03 mm.

<Manufacturing of Tire Including Resin-Metal Composite Member as Reinforcing Belt Member>

A carcass in which a reinforcing cord is covered with a coating rubber containing a rubber material is prepared. In addition, a bead member including (i) a bead core in which a metal wire as a bead wire is coated with a bead coating layer containing a rubber material, and (ii) a bead filler which is in contact with the bead core and contains a rubber material is prepared.

Next, a green tire is prepared using the obtained resin-metal composite member, bead member, and carcass such that the carcass extends to reach a pair of the bead members and have the carcass ends locked at the bead members, and such that the resin-metal composite member is provided in a state of being wound around the crown of the carcass, and such that an unvulcanized tread rubber is arranged on the resin-metal composite member, and such that an unvulcanized side rubber is disposed at the outer side in the tire width direction of the carcass at the side portion. The resin-metal composite member is disposed in the carcass such that the average distance between the metal members at adjacent portions of the resin-metal composite member is 1000 μm. The tire size is 245/35 R18. The thickness of the tread rubber is 10 mm.

The green tire is heated at 170°C for 18 minutes (i.e., vulcanization of rubber), thereby obtaining a tire for evaluation.

<Preparation of Samples for Measuring Physical Properties>

Apart from the preparation of the tire, samples for measuring various physical properties that reproduce the conditions of heating the tire (i.e., vulcanization of rubber) are prepared.

Specifically, 2 mm-thick plates formed with the coating resin layer-forming compositions having the compositions shown in Tables 1 and 2 are produced by injection molding, and JIS No. 3 dumbbell test pieces as coating resin layer measurement samples (1) are prepared from the plates by punching.

In order to make these measurement samples experience the same thermal history as that experienced by tires, the temperature of the coating resin layer portion of the resin-metal composite member at or around the tire center line is measured during vulcanization using a tire that is vulcanized under the same conditions as that applied for the tires described in the Examples and Comparative Examples. The coating resin layer measurement samples (1) are heat-treated under the temperature conditions obtained by the measurement and for the length of time required for vulcanization. The coating resin layer measurement samples after heat treatment are named "coating resin layer measurement samples (2)".

<Measurement of MFR, Mw (PMMA conversion), Tensile Modulus>

Using the obtained coating resin layer measurement samples (1), the melt flow rate MFR (at 260°C, 2.16 kg), weight average molecular weight Mw (in terms of PMMA), and tensile elastic modulus of the coated resin layer are measured by the above-mentioned methods.
Further, in Example 1, the weight average molecular weight Mw (PMMA conversion) of the resin material contained in the coating resin layer is measured by the above-mentioned method using the obtained coating resin layer measurement samples (2).
The results are shown in Tables 1 and 2.
Regarding the tensile elastic modulus, those having a tensile elastic modulus of 110 MPa or more are evaluated as "A(○)," and those having a tensile elastic modulus of less than 110 MPa are evaluated as "B (×)".

<Charpy Impact Test>

The Charpy impact test (low temperature conditions) of the coating resin layer is performed by the following method using the obtained coating resin layer measurement samples (2) to evaluate impact resistance at low temperatures.
The impact resistance at low temperatures is evaluated based on the results of the Charpy impact test (based on JIS K7111-1: 2012). Specifically, the test is performed at -20°C and -30°C under conditions of impact hammer 2J, and evaluation is made according to the following criteria using a digital impact tester (DG-UB type, manufactured by Toyo Seiki Seisaku-sho, Ltd.).
The results are shown in Tables 1 and 2.

A (○): No break at -30°C
B (Δ): No break at -20°C, but break at -30°C
C (×): Break at -20°C

<De Mattia Fatigue Test (80°C)>

The De Mattia fatigue test (80°C) of the coating resin layer is performed by the following method using the obtained coating resin layer measurement samples (2).
Measurement of the De Mattia fatigue test is carried out based on the De Mattia test (JISK6260(2017)/ISO 132) under conditions including a bending thickness of 2 mm, an 80°C environment, a chuck distance of 75 mm, a stroke of 20 mm, and a rate of 330 rpm.
The results are shown in Tables 1 and 2.
Those having a value of 100 or more are evaluated as "A (○)", and those having a value of less than 150 are evaluated as "B (×)".

<Tire Evaluation: Low Temperature Cleat Test>

A cleat test is performed at a low temperature (-10°C) by the following method using the obtained "tire for evaluation".
After precooling the tires in a freezer at -20°C, a drum test is performed in a 20°C environment. A protrusion having a longitudinal shape and a height of 19 mm is attached to the drum so as to butt the tire center position. The drum is run for 10 km at an internal pressure of 250 kPa, a load of 495 kgf, and a speed of 50 km/h, and the occurrence of cracks in the coating resin layer after running is checked.
The results are shown in Tables 1 and 2.
Those having no cracks in the coating resin layer are evaluated as "A (○)", and those having cracks in the coating resin layer are evaluated as "B (×)."

<Tire Evaluation: High Load Test (BF)>

A tire having a tire size of 225/40R18 is prepared as a tire for evaluation, and a high load test is performed using this tire by the following method.
The tire is run under the conditions of a test speed of 60 km/h, a test air pressure of 300 kPa, and a test load index × 180%, and cracks in the coating resin layer after running are checked.
The results are shown in Tables 1 and 2.
Those having no cracks in the coating resin layer are evaluated as "A (○)", and those having cracks in the coating resin layer are evaluated as "B (×)".

Table 1

| | Material | | Comparative Example | | Example | | Comparative Example | | | Example | | |
|---|---|---|---|---|---|---|---|---|---|---|---|---|
| | | | 1 | 2 | 1 | 2 | 3 | 4 | 5 | 3 | 4 | 5 |
| Coating resin layer composition | Thermoplastic elastomer TPC | 6347 | 100 | | | | | | | | | |
| | | 5557 | | 100 | | | 90 | 80 | 70 | | | |
| | | 4767N | | | | | | | | | | |
| | | 5577 | | | 100 | | | | | 90 | 80 | 70 |
| | | 4777 | | | | 100 | | | | | | |
| | Polyester-based thermoplastic resin PBT | 1401X06 | | | | | 10 | 20 | 30 | | | |
| | | 1401X04 | | | | | | | | 10 | 20 | 30 |
| | Specific amorphous resin | SH4500 | | | | | | | | | | |
| | Polyfunctional carbodiimide | 15CA | | | | | | | | | | |
| MFR | Melt indexer | | 24.3 | 16.9 | 6.8 | 6.6 | 25.5 | 27.6 | 29.6 | 9.3 | 11.1 | 15.4 |
| | | | | | | | * | | | | | |
| Molecular weight (Mw) | PMMA conversion | | 35000 | 43000 | 61000 | 68000 | 41000 | 40000 | 39000 | 490001 | 48000 | 47000 |
| | | | | | | | * | | | | | |
| Evaluation 1 | Elastic modulus [Mpa] | | 420 | 210 | 250 | 110 | 320 | 470 | 690 | 310 | 470 | 610 |
| | | | A (○) | A (○) | A (○) | B (×) | A (○) | A (○) | A (○) | A (○) | A (○) | A (○) |
| | | | | | | | * | | | | | |
| Evaluation 2 | Charpy low temperature | | C (×) | A (○) | A (○) | A (○) | A (○) | A (○) | C (×) | A (○) | A (○) | B (Δ) |
| | | | | | | | * | | | | | |
| Evaluation 3 | De Mattia fatigue test (80°C) | | 75 | 125 | 200 | ≥ 350 | 125 | 125 | 125 | 225 | 225 | 225 |
| | | | B (×) | B (×) | A (○) | A (○) | B (×) | B (×) | B (×) | A (○) | A (○) | A (○) |
| | | | | | | | * | | | * | | |

(continued)

| | Material | Comparative Example | | Example | | Comparative Example | | | Example | | |
|---|---|---|---|---|---|---|---|---|---|---|---|
| | | 1 | 2 | 1 | 2 | 3 | 4 | 5 | 3 | 4 | 5 |
| Tire evaluation | Low temperature cleat | B (X) | A (○) | A (○) | A (○) | A (○) | A (○) | B (×) | A (○) | A (○) | A (○) |
| | | | | * | * | * | * | * | * | | * |
| | BF | B (×) | B (×) | A (○) | A (○) | B (×) | B (×) | B (×) | A (○) | A (○) | A (○) |
| | | | | | * | * | * | * | * | | |

Table 2

| | Material | | Example 6 | Example 7 | Example 8 | Comparative Example 6 | Comparative Example 7 | Comparative Example 8 | Example 9 | Example 10 | Example 11 | Example 12 |
|---|---|---|---|---|---|---|---|---|---|---|---|---|
| Coating resin layer composition | Thermoplastic elastomer TPC | 6347 | | | | | | | | | | |
| | | 5557 | | 80 | | | | | | | | |
| | | 4767N | | | | 80 | 70 | 60 | | | | |
| | | 5577 | 80 | | 80 | | | | | | | |
| | | 4777 | | | | | | | 80 | 70 | 60 | 70 |
| | Polyester-based thermoplastic resin PBT | 1401X06 | 20 | 20 | 10 | 20 | 30 | 40 | | | | 30 |
| | | 1401X04 | | | | | | | 20 | 30 | 40 | |
| | Specific amorphous resin | SN4500 | | | 10 | | | | | | | |
| | Polyfunctional carbodiimide | 15CA | | 1 | | | | | | | | |
| MFR | Melt indexer | | 9.2 | 4.9 | 7.8 | 29.0 | 39.2 | 49.5 | 10.3 | 12.4 | 13.9 | 15.4 |
| | | | | | | * | | | * | | | * |
| Molecular weight (Mw) | PMMA conversion | | 47000 | 79000 | 51000 | 39000 | 38000 | 37000 | 51000 | 50000 | 48000 | 49000 |
| | | | | | | * | | | * | | | * |
| Evaluation 1 | Elastic modulus [Mpa] | | 480 | 450 | 430 | 250 | 410 | 580 | 330 | 490 | 660 | 440 |
| | | | A (○) | A (○) | A (○) | A (○) | A (○) | A (○) | A (○) | A (○) | A (○) | A (○) |
| | | | | | | * | | | * | | | * |
| Evaluation 2 | Charpy low temperature | | A (○) | A (○) | A (○) | A (○) | A (○) | B (Δ) | A (○) | A (○) | B (Δ) | A (○) |
| | | | * | | * | * | | | * | * | * | * |
| Evaluation 3 | De Mattia fatigue test (80°C) | | 175 | ≥ 350 | 225 | 125 | 125 | 125 | ≥ 350 | ≥ 350 | 300 | 300 |
| | | | A (○) | A (○) | A (○) | B (×) | B (×) | B (×) | A (○) | A (○) | A (○) | A (○) |
| | | | | | * | * | | | * | * | * | * |

(continued)

| | Material | Example | | | Comparative Example | | | Example | | | |
|---|---|---|---|---|---|---|---|---|---|---|---|
| | | 6 | 7 | 8 | 6 | 7 | 8 | 9 | 10 | 11 | 12 |
| Tire evaluation | Low temperature cleat | A (○) | A (○) | A (○) | A (○) | A (○) | A (○) | A (○) | A (○) | A (○) | A (○) |
| | | * | | * | * | * | * | * | * | * | * |
| | BF | A (○) | A (○) | A (○) | B (×) | B (×) | B (×) | A (○) | A (○) | A (○) | A (○) |
| | | * | | * | * | * | * | * | * | * | * |

Regarding the results of the measurement of various physical properties and the evaluation tests shown in the above tables (i.e., measurement of MFR, Mw (PMMA conversion), and tensile elastic modulus, Charpy impact test, De Mattia fatigue test, low temperature cleat test, and high load test (BF)), the data marked with "*" in the tables are prediction data by simulation, while the data not marked with "*" are data obtained by actually conducting the tests.

In Example 1, the weight average molecular weight Mw (PMMA conversion) of the resin material contained in the coating resin layer measurement samples (2) is 60,000. In other words, it is comparable to the weight average molecular weight Mw (PMMA conversion) of the resin material contained in the coating resin layer measurement samples (1) before imparting a thermal history under the conditions of tire heating (i.e., vulcanization of rubber).

In view of the above, it is considered that the melt flow rate MFR and the tensile elastic modulus of the resin material before heating of the tire (i.e., vulcanization of rubber) and the tensile elastic modulus of the resin material after heating of the tire are also comparable.

The unit of composition shown in the tables is "part" unless otherwise specified.

The components in the tables are as follows.

(Thermoplastic Elastomer)

- 6347: Polyester-based thermoplastic elastomer "HYTREL 6347" with a melting point of 215°C manufactured by DU PONT-TORAY CO., LTD.
- 5557: Polyester-based thermoplastic elastomer "HYTREL 5557" with a melting point of 207°C manufactured by DU PONT-TORAY CO., LTD.
- 4767N: Polyester-based thermoplastic elastomer "HYTREL 4767N" with a melting point of 199°C manufactured by DU PONT-TORAY CO., LTD.
- 5577: Polyester-based thermoplastic elastomer "HYTREL 5577" with a melting point of 208°C manufactured by DU PONT-TORAY CO., LTD.
- 4777: Polyester-based thermoplastic elastomer "HYTRELel 4777" with a melting point of 200°C manufactured by DU PONT-TORAY CO., LTD.

(Additive Resin)

- 1401X06: Polybutylene terephthalate resin (PBT) "TORAYCON 1401X06" manufactured by Toray Industries, Inc.
- 1401X04: Polybutylene terephthalate resin (PBT) "TORAYCON 1401X04" manufactured by Toray Industries, Inc.
- Specific amorphous resin: Polyester resin "ALTESTER SN4500" with a glass transition temperature of 100°C manufactured by Mitsubishi Gas Chemical Company, Inc.
- 15CA: Polyfunctional carbodiimide compound "CARBODILITE (registered trademark) HMV-15CA" manufactured by Nisshinbo Chemical Inc.

As can be seen from the evaluation results shown in Tables 1 and 2, it was found that in the Examples in which the MFR of the resin-coated layer is from 0.5 g/10 min to 16.5 g/10 min, excellent fatigue durability is achieved as compared with the Comparative Examples in which the MFR falls outside the above range.

10: Tire, 12: Bead portion, 16: Crown portion (outer circumferential portion), 17: Tire frame, 18: Bead core, 20: Rim, 21: Bead sheet, 22: Rim flange, 24: Seal layer, 25: Adhesive layer, 26: Resin cord member, 27: Metal member, 28: Coating resin layer, 30: Tread, D: Metal member diameter, L: Metal member embedment depth, 110: Tire (run-flat tire), 114: Carcass, 122: Tire side portion, 124: Side reinforcing rubber, 126: Bead core, 126A: Bead wire (wire), 128: Bead filler, 140: Belt layer, 142C: Reinforcing cord (cord)

## Claims

1. A resin-metal composite member for a tire, the composite member comprising a metal member and a coating resin layer that covers the metal member and contains a resin material, wherein:

    the resin material contains at least a thermoplastic elastomer, and
    the coating resin layer has a melt flow rate of from 0.5 g/10 min to 16.5 g/10 min.

2. The resin-metal composite member for a tire according to claim 1, wherein the melt flow rate of the coating resin layer is from 2 g/10 min to 16 g/10 min.

**3.** The resin-metal composite member for a tire according to claim 1, wherein the melt flow rate of the coating resin layer is from 4 g/10 min to 15.4 g/10 min.

**4.** The resin-metal composite member for a tire according to any one of claims 1 to 3, wherein the resin material has a weight average molecular weight of from 44,000 to 100,000 in terms of conversion to polymethyl methacrylate.

**5.** The resin-metal composite member for a tire according to any one of claims 1 to 3, wherein the resin material has a weight average molecular weight of from 45,000 to 90,000 in terms of conversion to polymethyl methacrylate.

**6.** The resin-metal composite member for a tire according to any one of claims 1 to 3, wherein the resin material has a weight average molecular weight of from 47,000 to 79,000 in terms of conversion to polymethyl methacrylate.

**7.** The resin-metal composite member for a tire according to any one of claims 1 to 6, wherein the coating resin layer has a tensile elastic modulus of from 110 MPa to 660 MPa.

**8.** The resin-metal composite member for a tire according to any one of claims 1 to 7, wherein the thermoplastic elastomer is a polyester-based thermoplastic elastomer.

**9.** The resin-metal composite member for a tire according to any one of claims 1 to 8, wherein the resin material further contains at least one additive resin selected from an amorphous resin having an ester bond or a polyester-based thermoplastic resin.

**10.** The resin-metal composite member for a tire according to claim 9, wherein the amorphous resin having an ester bond is at least one resin selected from an amorphous polyester-based thermoplastic resin or an amorphous polycarbonate-based thermoplastic resin.

**11.** The resin-metal composite member for a tire according to claim 9 or 10, wherein the polyester-based thermoplastic resin is at least one resin selected from polybutylene terephthalate, polyethylene terephthalate, polybutylene naphthalate, or polyethylene naphthalate.

**12.** The resin-metal composite member for a tire according to any one of claims 9 to 11, wherein the additive resin has a weight average molecular weight of from 10,000 to 70,000.

**13.** The resin-metal composite member for a tire according to any one of claims 9 to 11, wherein the additive resin has a weight average molecular weight of from 20,000 to 50,000.

**14.** The resin-metal composite member for a tire according to any one of claims 9 to 11, wherein the additive resin has a weight average molecular weight of from 28,000 to 37,000.

**15.** The resin-metal composite member for a tire according to any one of claims 9 to 14, wherein a content of the additive resin is from 5% by mass to 50% by mass with respect to the resin material.

**16.** The resin-metal composite member for a tire according to any one of claims 1 to 15, further comprising an adhesive layer between the metal member and the coating resin layer.

**17.** The resin-metal composite member for a tire according to claim 16, wherein the adhesive layer contains an acid-modified thermoplastic elastomer.

**18.** A tire comprising:

an annular carcass or tire frame containing an elastic material; and
the resin-metal composite member for a tire according to any one of claims 1 to 17.

**19.** The tire according to claim 18, wherein the resin-metal composite member for a tire configures a reinforcing belt member that is wound around an outer circumferential portion of the carcass or the tire frame in a circumferential direction.

**20.** The tire according to claim 18, wherein the resin-metal composite member for a tire configures a bead member.

**21.** The tire according to claim 18, comprising:

the carcass, which includes a cord covered with a rubber material;
a reinforcing belt member that is wound around the outer circumferential portion of the carcass in the circumferential direction and includes a metal cord and a belt coating layer, the belt coating layer covering the metal cord and containing a first resin material; and
a bead member having a metal wire and a bead coating layer, the bead coating layer covering the metal wire and containing a second resin material,
wherein the resin-metal composite member for a tire configures at least one of the reinforcing belt member or the bead member.

**22.** The tire according to claim 21, wherein a melt flow rate of the belt coating layer is lower than a melt flow rate of the bead coating layer.

**23.** The tire according to claim 21 or 22, wherein the bead member comprises:

a bead core comprising the metal wire and the bead coating layer; and
a bead filler containing a third resin material, the bead filler contacting the bead core and being arranged at least at an outer side of the bead core in a tire radial direction.

**24.** The tire according to claim 18, comprising:

the carcass, which has a cord covered with a rubber material;
a reinforcing belt member that is wound around an outer circumferential portion of the carcass in the circumferential direction and is configured by the resin-metal composite member for a tire; and
a bead member that includes:

a bead core including a metal wire and a bead coating layer, the bead coating layer covering the metal wire and containing a first rubber material; and
a bead filler containing a second rubber material that is in contact with the bead core and being arranged at least at an outer side of the bead core in a tire radial direction.

**25.** The tire according to claim 18, comprising:

the carcass, which includes a cord covered with a rubber material;
a reinforcing belt member that is wound around an outer circumferential portion of the carcass in the circumferential direction and includes a metal cord and a belt coating layer, the belt coating layer covering the metal cord and containing a rubber material; and
a bead member that is configured by the resin-metal composite member for a tire.

**26.** The tire according to any one of claims 21 to 25, which is a run-flat tire having a side reinforcing rubber at an inner side of the carcass in a tire width direction.

**27.** A method of manufacturing a resin-metal composite member for a tire, comprising a coating resin layer forming step of applying a coating resin layer-forming composition containing a resin material onto a metal member to form a coating resin layer that covers the metal member, wherein:

the resin material contains at least a thermoplastic elastomer, and
the coating resin layer formed by the coating resin layer forming step has a melt flow rate of from 0.5 g/10 min to 16.5 g/10 min.

**28.** The method of manufacturing a resin-metal composite member for a tire according to claim 27, wherein the resin material contained in the coating resin layer formed by the coating resin layer forming step has a weight average molecular weight of from 44,000 to 100,000 in terms of conversion to polymethyl methacrylate.

FIG.1A

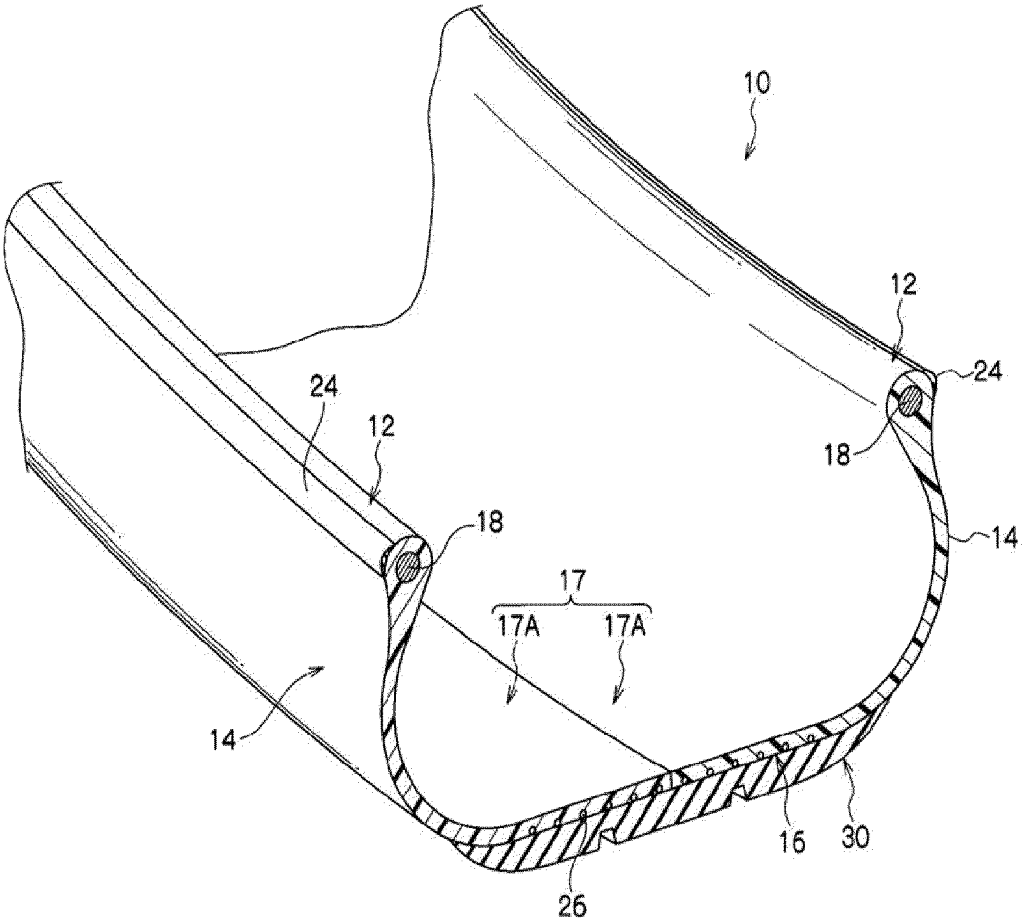


FIG.1B

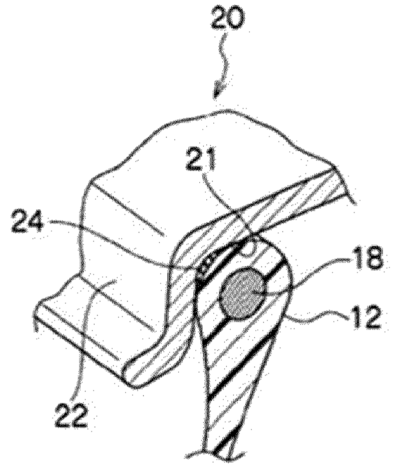

FIG.2

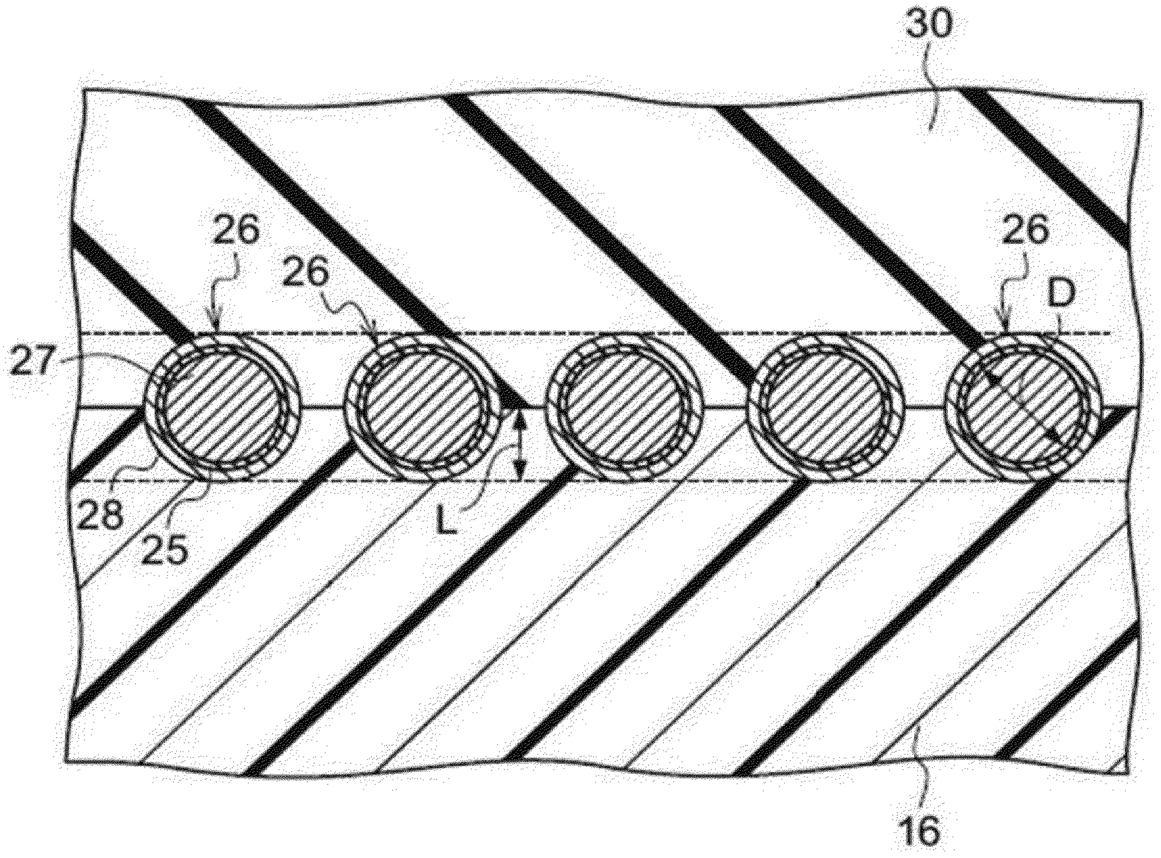

FIG.3

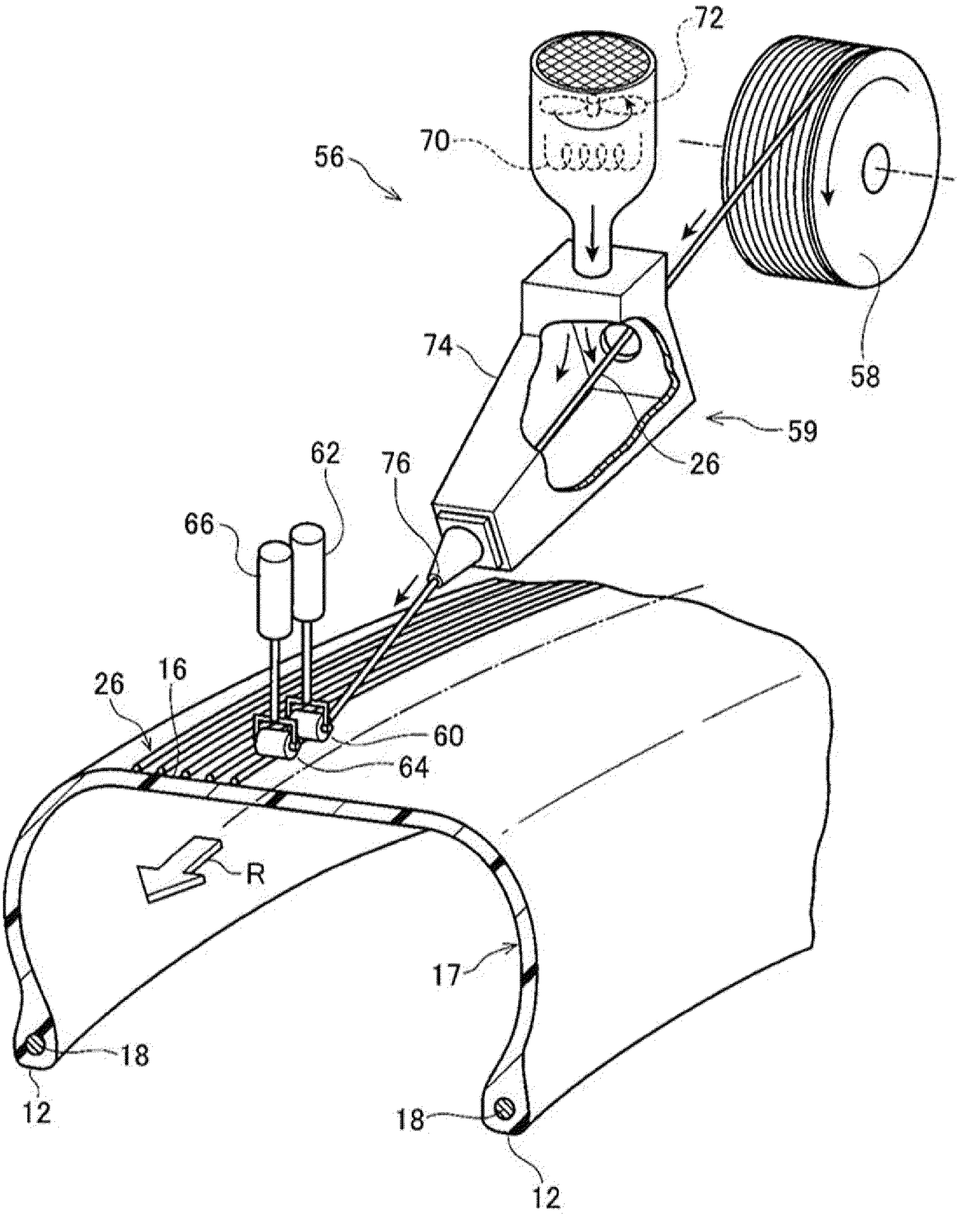

FIG.4

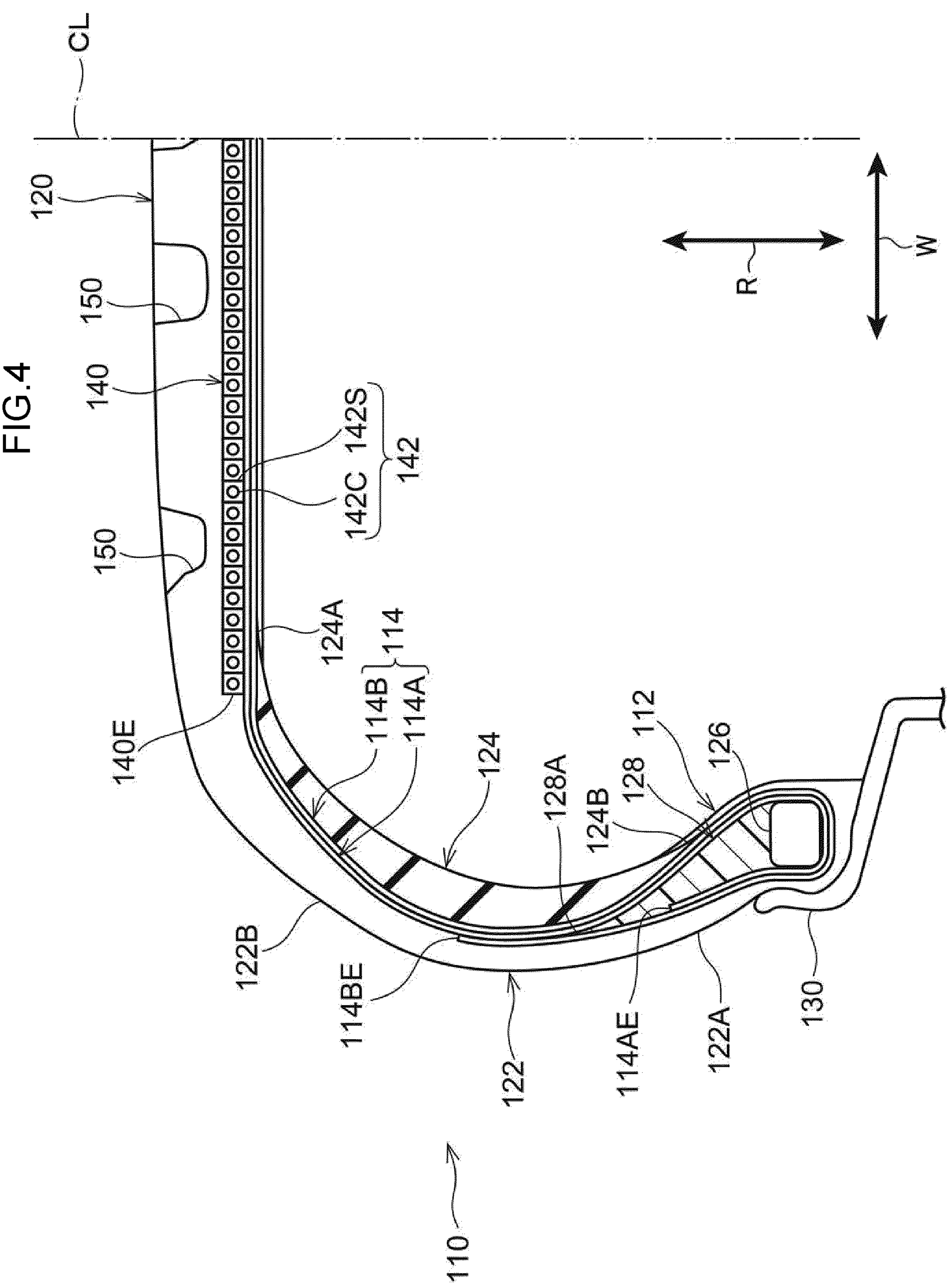
CL
120
150
140
142C
142S
142
150
124A
114B
114A
114
140E
124
128A
124B
128
112
126
122B
114BE
122
114AE
122A
130
110
R
W

FIG.5

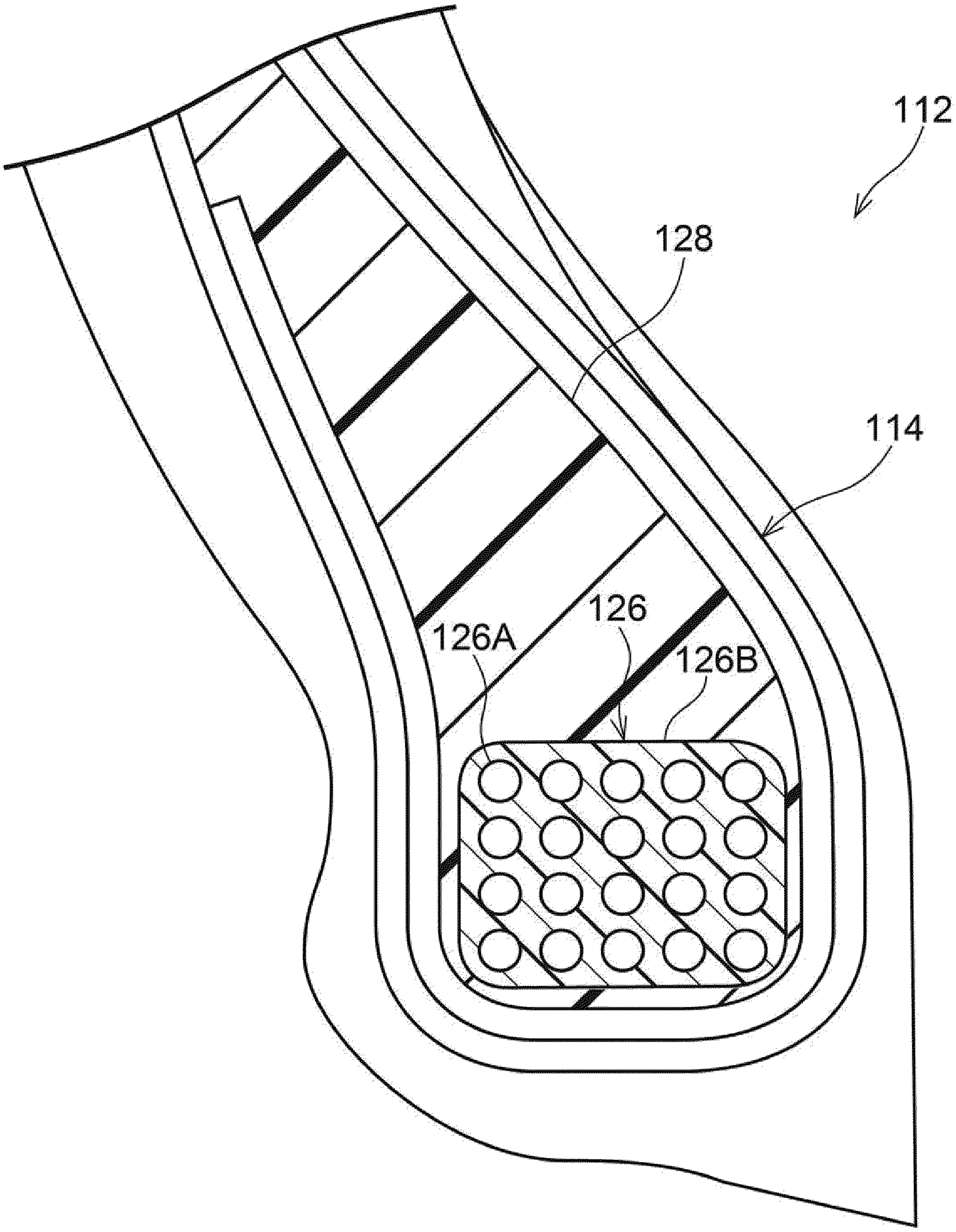

FIG.6

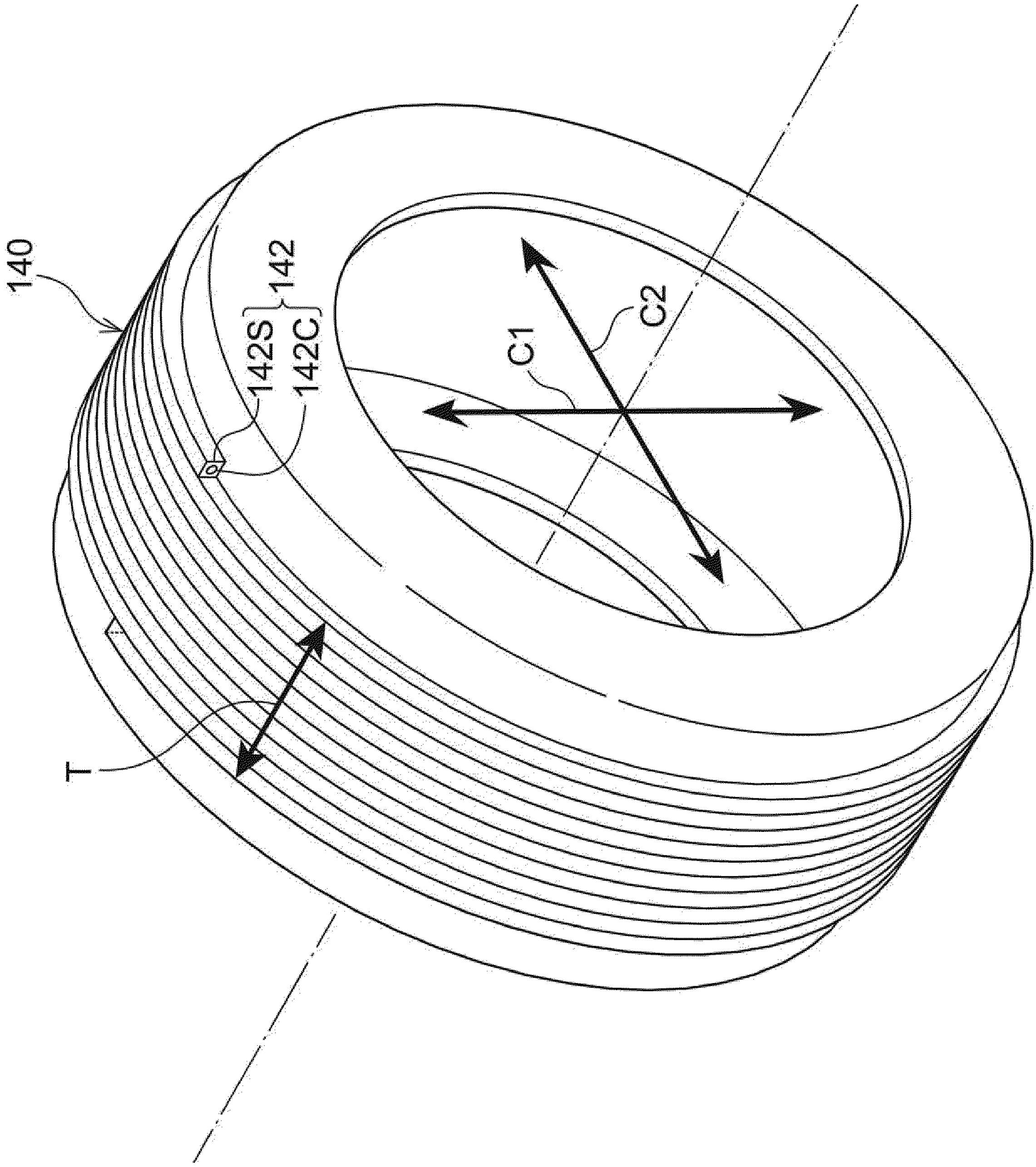

FIG.7

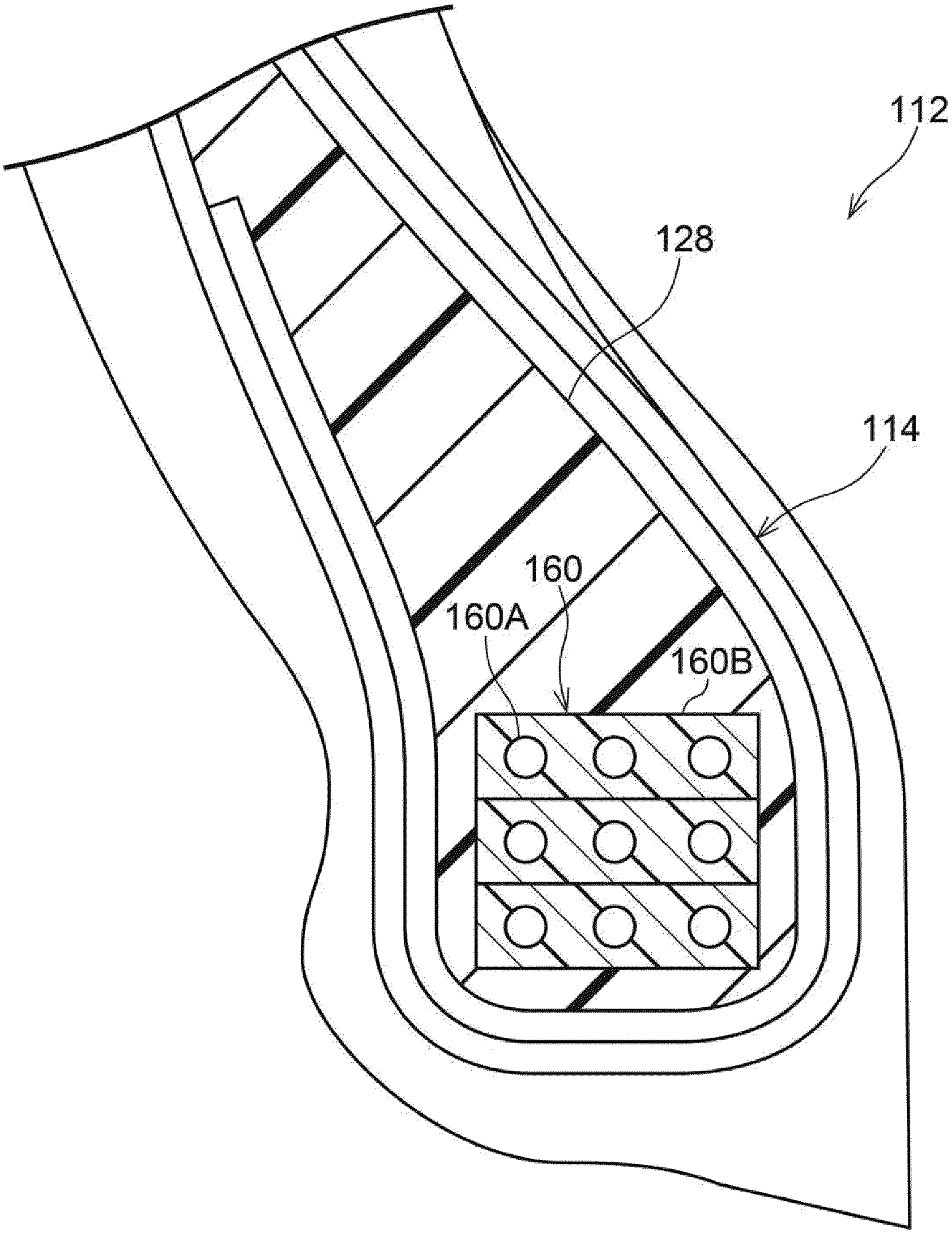

FIG.8

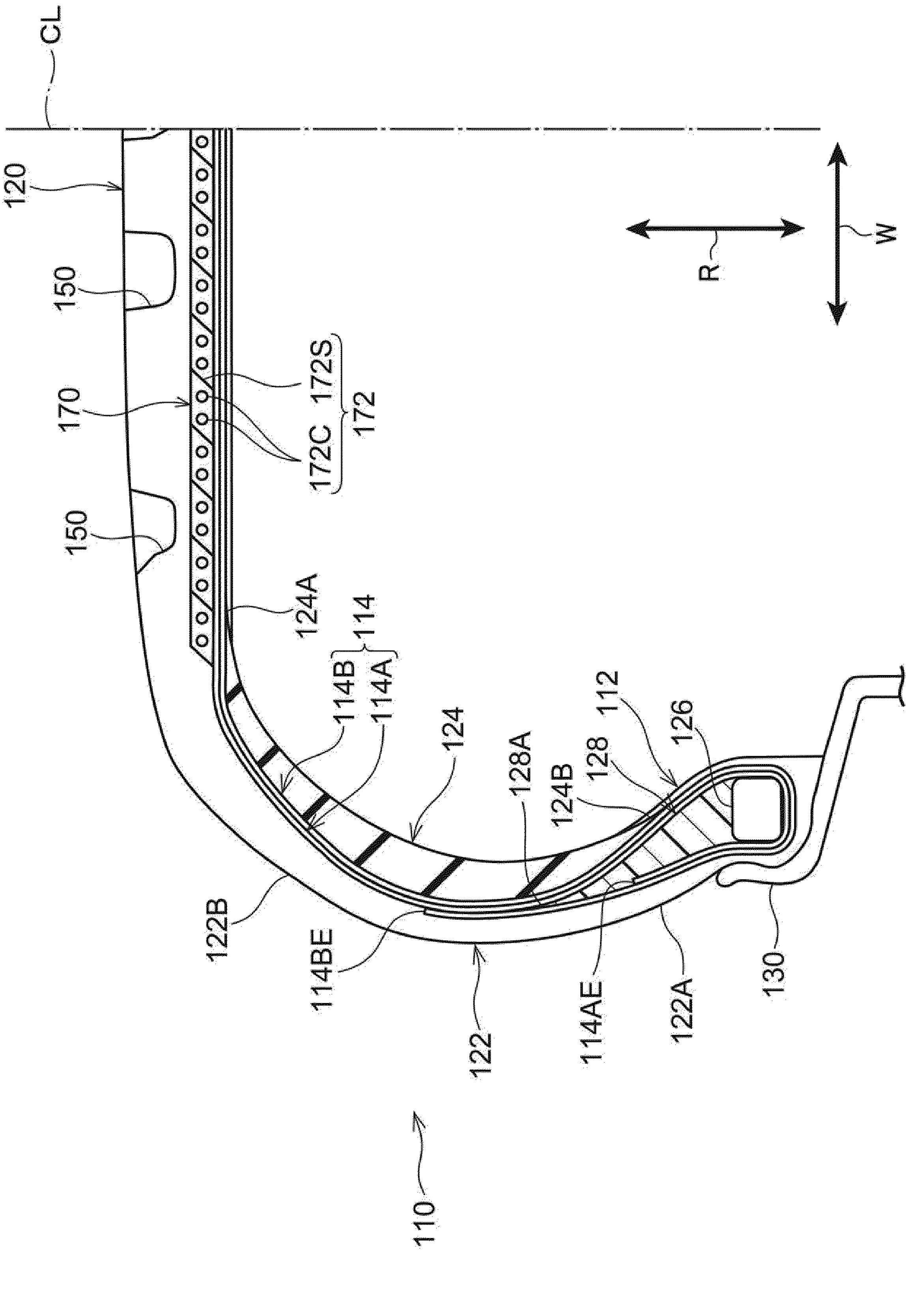
CL
120
150
150
170
172S
172
172C
124A
114
114B
114A
124
112
126
128
124B
128A
122B
114BE
122
114AE
122A
130
110
R
W

**INTERNATIONAL SEARCH REPORT**

International application No. PCT/JP2019/021349

A. CLASSIFICATION OF SUBJECT MATTER
Int.Cl. B60C1/00(2006.01)i, B60C9/20(2006.01)i, B60C9/22(2006.01)i, B60C15/04(2006.01)i, C08L67/03(2006.01)i

According to International Patent Classification (IPC) or to both national classification and IPC

B. FIELDS SEARCHED

Minimum documentation searched (classification system followed by classification symbols)
Int.Cl. B60C1/00, B60C9/20, B60C9/22, B60C15/04, C08L67/03

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2013/129525 A1 (BRIDGESTONE CORPORATION) 06 September 2013, claims, paragraph [0137], examples, figures & US 2015/0053327 A1, claims, paragraphs [0204]-[0206], examples, figures & EP 2821248 A1 | 1-8, 18-19, 27-28<br>16-17<br>9-15, 20-26 |
| Y | WO 2017/104472 A1 (BRIDGESTONE CORPORATION) 22 June 2017, claims, examples, figures & JP 2017-109619 A & US 2018/0361796 A1, claims, examples, figures & EP 3392060 A1 | 16-17 |
| Y | WO 2017/104663 A1 (BRIDGESTONE CORPORATION) 22 June 2017, claims, examples, figures & US 2018/0370285 A1, claims, examples, figures & EP 3392062 A1 | 16-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 August 2019 (14.08.2019) | 27 August 2019 (27.08.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/021349

C (Continuation). DOCUMENTS CONSIDERED TO BE RELEVANT

| Category* | Citation of document, with indication, where appropriate, of the relevant passages | Relevant to claim No. |
|---|---|---|
| A | WO 2014/175453 A1 (BRIDGESTONE CORPORATION) 30 October 2014, entire text, all drawings & US 2016/0152079 A1 & EP 2990220 A1 | 1-28 |
| A | WO 2014/175452 A1 (BRIDGESTONE CORPORATION) 30 October 2014, entire text, all drawings & US 2016/0075182 A1 & EP 2990221 A1 | 1-28 |
| A | JP 2015-164848 A (BRIDGESTONE CORPORATION) 17 September 2015, entire text, all drawings (Family: none) | 1-28 |
| A | JP 2016-27982 A (BRIDGESTONE CORPORATION) 25 February 2016, entire text, all drawings (Family: none) | 1-28 |
| A | JP 2016-52890 A (BRIDGESTONE CORPORATION) 14 April 2016, entire text, all drawings (Family: none) | 1-28 |
| A | JP 2017-95616 A (BRIDGESTONE CORPORATION) 01 June 2017, entire text, all drawings (Family: none) | 1-28 |
| A | JP 2013-82311 A (BRIDGESTONE CORPORATION) 09 May 2013, entire text, all drawings (Family: none) | 1-28 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012046025 A
- JP 2004346273 A
- JP 5331256 A